# EUROPEAN PATENT SPECIFICATION

(11) **EP 2 061 711 B1**
(45) Date of publication and mention of the grant of the patent: **23.03.2011**
(21) Application number: 07815684.1
(22) Date of filing: 13.09.2007
(51) Int. Cl.: B65G 45/02, B65G 45/08

(54) **LUBRICATING METHOD FOR A CONVEYOR, CONVEYOR AND LUBRICATING EQUIPMENT**
SCHMIERVERFAHREN FÜR EIN FÖRDERGERÄT, FÖRDERGERÄT UND SCHMIERAUSRÜSTUNG
PROCÉDÉ DE LUBRIFICATION POUR UN TRANSPORTEUR, TRANSPORTEUR ET ÉQUIPEMENT DE LUBRIFICATION

(30) Priority: 13.09.2006 BE 200600462; 07.12.2006 BE 200600598
(43) Date of publication of application: 27.05.2009
(73) Proprietor: Turck, Pieter, 2950 Kapellen (BE)
(72) Inventor: Turck, Pieter, 2950 Kapellen (BE)
(74) Representative: Powis de Tenbossche, Roland
(86) International application number: PCT/BE2007/000105
(87) International publication number: WO 2008/031176

(56) References cited:
- WO-A-00/20307
- WO-A-97/06082
- JP-A- 59 172 320
- US-A- 4 960 200
- US-A1- 2003 134 752
- US-A1- 2003 207 040

## Description

### Field of invention

This invention relates to a conveyor belt lubrication method, to a conveyor for the transport of various types of containers such as bottles, cans, carton boxes, vials, and the like and to a lubrication equipment according to the preamble of claims 1, 10 and 21 respectively. Those containers can be empty or filled and can be made of plastic, glass, metal, carton or cardboard with various different sizes and forms.

The invention relates to methods to lubricate the interface between the containers and the transport surface of the conveyor belt(s) (top lubrication or lubrication of transport surface of the conveyor belt), as well as the interface between the guiding surface of the conveyor belt and the guiding surface of the guiding element (bottom lubrication or lubrication of the guiding surface of the conveyor belt).

### Background of the invention

In commercial filling, handling, packaging and other operations, as for example, in the food & beverage industry, it is common practice that the container is moved by means of a conveyor belt system alongside a particular path to and from various stations for particular container treatment. Those stations can be filling devices, heat treatment machinery, labelling machines, in-line quality control equipment, packers, etc.

Such conveyor systems are generally composed of one or more parallel endless conveyor belts supported by guiding means and driven by a rotating motor. To set off the differences in container treatment time of the various stations and/or to absorb the input of containers in case of a station breakdown, some intermediate conveyors are adequate to operate as a temporary queuing zone and/or specific buffering equipment is incorporated.

It is well known that the friction between a moving conveyor and the container considerably often reduces the stability of the containers on the conveyor resulting in a high degree of falling containers, leads to damages mainly on the bottom side of the container and increases considerably the power consumption of the conveyor driving motors.

To reduce this disadvantageous relatively high friction, it is common practice to apply liquid solutions to the conveyor to provide lubricity to the container and conveyor (top lubrication) ; the commonly used dispensing equipment are spray nozzle systems or brushing systems through which the liquid is added to the conveyor in a continuous or discontinuous way.

These liquids are most often diluted aqueous lubricant solutions, such as water solutions with soap or silicones, added in substantial high amounts causing flooding of the conveyors and a substantial drain from the conveyor surface to surfaces underneath, either in drip trays or most commonly on the floor.

The major disadvantages of this technology are the high consumption cost of the lubricant, the safety hazards due too slippery floors, the substantial bacteriological growth alongside the conveyor strokes, on the container and throughout the lubrication equipment, the effluent treatment costs, the relatively high and uncontrollable friction factors, the concerns about moisture absorption by carton/cardboard containers, the concerns about compatibility of the lubricant with the container, such as stress cracking on PET containers, and a general poor appearance.

Another disadvantage of spray applicators is that the splash or mist of the lubricant leaves traces on the container surface and creates a general environmental pollution ; in certain situations the lubricant can come in direct contact with the content of the container.

In case of food or beverage contents this can result in ingestion of lubricant traces from the container or from the food/beverage.

Another disadvantage of spraying systems are the relatively high degree of waste product on non-friction areas of the conveyor necessitating supplementary cleaning activities.

In order to improve the lubricating performances and general appearance, less-and non-diluted liquid solutions are used and also the efficiency of the conventional spraying systems has been increased; more particularly improvements have been achieved on the general consumption and the particle size of the sprayed or air-sprayed lubricant.

Although less pronounced, the majority of the disadvantages nevertheless still remain existing.

To prevent some disadvantages with respect to aqueous liquids, non water based lubricants, as for example lubricants based on mineral or synthetic oils, have been applied and added on the conveyor/container interface surface through brushes.

The direct contact of the brush fibres of brush applicators with the conveyor surface causes relatively high degree of wear and deformation resulting in short life times and consequently substantial replacement costs ; those brushes also tend to accumulate environmental dust and contamination products causing uneven add on of lubricant on the conveyor surface increasing the friction factor.

In order to overcome a gradual decrease of the lubricating efficiency the amounts of lubricant applied to the brushes are increased creating again an increased degree of contamination, again necessitating a further increase of lubricant supply, etc.

Document JP 5 917 2320 A discloses a method of lubricating a moving conveyor, a conveyor and a lubrication equipement according to the preamble of claims 1,10 and 21 respectively.

None of said available technologies does purposively remedy the problems related to the friction between the guiding surface of the conveyor belt and the guiding surface of the guiding element (bottom friction).

Frequently, and more particularly at higher container loads and/or higher conveyor speeds, this relatively high friction factor creates substantial heat and wear at the interface of the conveyor belt and the guiding element.

Another disadvantage of this high friction is the so called "stick-slip" phenomena of the conveyor belt which create supplementary instability to the conveyed containers.

Those disadvantages tend also to increase the power consumption of the driving motors of the conveyors, to increase the wear of the conveyor belt and to increase the general noise level of the conveyors in operation.

The present invention solves the above mentioned problems by providing a method of lubricating a moving conveyor according to claim 1, a conveyor with means for lubricating according to claim 10 and a lubrication equipement according to claim 21.

In order to reduce the impact of some of said problems, it has been proposed by Applicant to have a dry lubrication system mounted in the return side of the conveyor in order to lubricate the transport surface of the conveyor belt during its return path, while the guiding surface of the conveyor belt is lubricated at the transport path of the conveyor belt through the use of injection points in the guiding surface.

With such a system, it has been observed that the injection points get often blocked by debris emanating from environmental dust, wear product, spills of the liquid to be filled in the containers, etc., . This contamination will result in a reduction of bottom lubrication efficiency. The "stick-slip" phenomena of the conveyor belt and the increase of wear of the conveyor belt and its guiding element due to said lack of lubricant efficiency following such a contamination, increases the risk of containers to fall resulting in a lower line efficiency.

There is a substantial need, mainly in the food and beverage industry, to eliminate the safety, environmental and hygienic disadvantages, while ensuring low operating costs.

### Brief description of the invention

The present invention has been developed to eliminate one or more of the aforementioned disadvantages, preferably at least most of the aforementioned disadvantages, while simultaneously meeting increased efficiency/safety requirements of new generation high speed conveyor lines.

The invention relates to a method of lubricating a moving conveyor ensuring at least a movement of at least one container according to a transport direction (P1), whereby said conveyor (1) comprises at least:
- at least one endless conveyor belt (3),
- at least one guiding element with at least one gliding face (11) for said at least one endless conveyor belt (3), said at least one guiding element being adapted for guiding the at least one endless conveyor belt at least partly in the transport direction (P1),
- at least one lubricant provider for providing the endless conveyor belt (3) with at least one lubricant,
   and
- at least a driving system for driving the conveyor belt along a continuous path comprising at least
   a first path portion moving in accordance to said transport direction (P1), and a second path portion of said at least one endless belt (3) moving in a return direction (P2),
   whereby said conveyor belt comprises at least:
   (a) a transport surface (7) adapted to support the at least one container to be moved according to the transport direction (a first interface is defined between the transport surface (7) and the container(s), whereby at said first interface, some frictions are generated, for example when the conveyor belt (3) is still moving, while the containers are stopped before entering in a treatment zone, such a filling zone, a labelling zone, a control zone, a packaging zone, etc.), and
   (b) at least one guiding surface (10) opposite to the transport surface (7), whereby said at least one guiding surface (10) is adapted to have contact with at least one gliding face (11) of the guiding element (a second interface is defined between said at least one guiding surface and the at least one gliding face (11) of the guiding element).

In the method of the invention, lubricant is applied, preferably intermittently, on a part of the transport surface (7) of the conveyor belt (3) during a part of the second path portion of the conveyor belt moving in the return direction, as well as on a part of the guiding surface (10) of the conveyor belt (3) during a part of the second path portion of the conveyor belt moving in the return direction.

Advantageously, the lubricant used is a waterless lubricant adapted to adhere to the transport surface (7) and to the guiding surface (10) of the conveyor belt (3), said lubricant having preferably a viscosity of minimum 15 cSt. at 20°C.

Preferably, a same lubricant is applied, preferably intermittently, on a part of the transport surface (7) of the conveyor belt (3) during a part of the second path portion of the conveyor belt moving in the return direction, as well as on a part of the guiding surface (10) of the conveyor belt (3) during a part of the second path portion of the conveyor belt moving in the return direction.

According to a preferred embodiment, lubricant is applied, preferably intermittently, on a part of the transport surface (7) of the conveyor belt (3) during a part of the second path portion of the conveyor belt moving in the return direction at an application rate between 0.005 and 0.10 mm³/ cm² overall belt surface and per hour, preferably for PET containers or bottles between 0.005 and 0.05 mm³/cm² overall belt surface and per hour, and on a part of the guiding surface (10) of the conveyor belt (3) for a part of the second path portion of the conveyor belt moving in the return direction at a rate between 0,0005 and 0,01 mm³/cm² overall belt surface and per hour, preferably between 0.001 and 0.005 mm³/cm² overall belt surface and per hour. "Overall belt surface" means the surface of the belt measured between its opposite extreme lateral longitudinal edges, i.e. the width measured between said opposite extreme lateral edges multiplied by the total length of the belt.

The application of lubricant to the transport surface (7) and the guiding surface (10) is advantageously operated for a same part of the second path portion of the conveyor belt (3). Preferably, the application of lubricant to the guiding surface (10) is operated by a distribution unit covering at least partly or located at least partly above the distribution unit adapted to supply lubricant to the transport surface (7). This covering or partial covering enables to ensure an efficient application of lubricant on the guiding surface, as well as prevent that lubricant applied to the guiding surface (10) to drain on inappropriate surfaces.

Advantageously, lubricant is applied, preferably intermittently, on a part of the transport surface (7) of the conveyor belt (3) during a part of the second path portion of the conveyor belt moving in the return direction, advantageously at an application rate between 0.005 and 0.10 mm³/ cm² overall belt surface and per hour, preferably for PET containers or bottles, at an application rate between 0.005 and 0.05 mm³/cm² overall belt surface and per hour, by adding or supplying, preferably intermittently, lubricant on a lubrication surface (17) and by moving a part of the conveyor belt (3) alongside said lubrication surface (17) during said part of the second path portion of the conveyor belt moving in the return direction. Preferably, lubricant is supplied intermittently to the lubrication surface (17) at specific supply time periods spaced the one from another by an intermediate period with no lubricant supply, whereby no lubricant is advantageously supplied to the lubrication surface (17) for intermediate periods advantageously of at least 5 minutes, preferably at least 10 minutes, most preferably at least 15 minutes. According to a detail of an embodiment, lubricant is supplied intermittently at specific supply time periods on the guiding surface (10) of the conveyor belt (3) during a part of the second path portion of the conveyor belt moving in the return direction, advantageously at a rate between 0,0005 and 0,01 mm³/cm² overall belt surface and per hour, preferably between 0.001 and 0.005 mm³/cm² overall belt surface and per hour, whereby no lubricant is supplied to the guiding surface for intermediate periods between two successive supply time periods, said intermediate periods with no lubricant supply being advantageously at least 5 minutes, preferably at least 10 minutes, most preferably at least 15 minutes. Preferably, lubricant is supplied to the guiding surface (10) of the conveyor belt (3) during a part of the second path portion of the conveyor belt moving in the return direction, by dropping at least one tenth of a drop, preferably at least one third of a drop (one third of a drop corresponding to about 10mm³) of lubricant at specific supply time periods on said successive parts of the guiding surface (10).

According to a specific embodiment, at specific supply time periods, lubricant is supplied to the lubrication surface (17) and/or transport surface (7), as well as to a part of the guiding surface (10) of the conveyor belt (3) during a part of the second path portion of the conveyor belt moving in the return direction, preferably during substantially the same part of the second path portion of the conveyor belt (3) moving in the return direction.

According to advantageous detail of an embodiment, at least one parameter function of the friction is at least estimated for one or more belts, in which said at least estimated parameter is compared with at least one value corresponding to a maximal admissible friction for said at least one or more belts, whereby when the estimated parameter corresponds to a friction above the said maximal admissible friction, lubricant is applied, preferably intermittently, on a part of the transport surface (7) of the conveyor belt (3) during a part of the second path portion of the conveyor belt moving in the return direction, and on a part of the guiding surface (10) of the conveyor belt (3) during a part of the second path portion of the conveyor belt moving in the return direction, up to achieving an estimated parameter corresponding to a friction lower than said maximal admissible friction for said at least one or more conveyor belts.

Preferably, the parameter corresponds to or is function of the coefficient of friction (COF), and the value corresponding to the maximal admissible friction depends on the conveyor belts considered. Said value corresponding to the maximal admissible friction is a value corresponding to or function of a coefficient of friction (COF), said coefficient of friction COF between the transport surface (7) and the container is for example comprised between 0.03 and 0.25 (for example for cardboard packages or containers), advantageously ranging from 0.05 to 0.12 for PET containers.

The COF is a measure of the friction of the containers with respect to the transport surface of the belt.

According to a detail of the method, the conveyor belt(s) is/are submitted when required to one or more cleaning steps and to one or more rinsing steps.

The invention relates thus also to a particular method to lubricate and advantageously to clean and/or to rinse a conveyor composed of one or more parallel endless conveyor belts driven by a motor, such as rotating motor, where the container(s) are located on the transport surface of the conveyor belt and are moved into the transport direction and where at the return side the conveyor belt is free of any container load and is moved in the opposite direction.

The method comprises the steps of providing lubricant distribution units on the return side of the conveyor belt advantageously with integrated measurement devices, channels and lubricant injection points through which the lubricant is added or supplied, preferably intermittently, directly or indirectly, on the transport surface and the guiding surface of the conveyor belt.

In the method of the invention, use is advantageously made to a selection of a preferably non-aqueous, homogenous and full stable lubricant preferably qualified for accidental food contact (NSF-H1) and owning adequate general friction reduction properties and adhesive properties to the conveyor chain material of the transport surface and the guiding surface.

According to a preferred embodiment, the method also includes the steps of establishing a proper setting of the adjustable integrated measurement devices in order to achieve an optimal rate of conveyor belt lubrication. The optimal rate is achieved at a minimum lubricant supply corresponding to the friction requirements and still ensuring a uniform microscopic lubricant layer on both contact surfaces of the conveyor chain.

The method includes also advantageously conveyor belt cleaning steps, advantageously by providing the conveyor belt cleaning infrastructure integrated in the said distribution units.

An advantage of the method of the invention versus common practice is that the lubrication of the interface between the transport surface and the conveyed container, as well as the lubrication of the interface between the guiding surface of the conveyor belt and the gliding face of the guiding element take place at the return side of the conveyor so that there is no immediate interaction between the conveying of the container and the lubricating of the conveyor belt, as well as so that a better lubrication of the guiding surface of the conveyor belt can be achieved. The lubrication of the transport surface and of the guiding surface of the belt is preferably carried out at a substantially same location on the return path.

Another advantage of the method of the invention is that in combination with an appropriate lubricant the consumption cost can be minimised and appears to be substantially lower than with the commonly used lubrication methods.

A further advantage of the method of the invention is that it enables to meet the increased efficiency requirements of the new generation high-speed conveyor lines.

A supplementary advantage compared to the current lubrication methods is that the interface between the conveyor belt and its guiding surface is now purposively and correctly lubricated, reducing the wear, increasing the life time of the guiding surface and the conveyor belt, and reducing the stick-slip. Where currently non diluted aqueous solutions or oil based lubricants are applied, this problem is frequently resolved by spraying quite high amounts of cooling/lubrication products at the return side on the conveyor belt.

A purposive lubrication of both interface sides of the conveyor belt as done in the method of the invention increases considerably the lifetime of the conveyor belt and the guiding material, and reduces the number of maintenance per year and the number of repairs requiring to stop the transport of containers.

Another advantage of the preferred method of the invention is that through an appropriate predetermination of the measurement devices a minimal consumption can be achieved with no drain of lubricant from the conveyor belt to underlying surfaces securing a dry working environment without slippery floors and preventing effluent treatment costs.

Another advantage of the preferred method of the invention is that the use of individual adjustable measurement devices allows high-speed conveyor lines to be operated with higher efficiencies.

Compared to methods using aqueous lubricants, an additional cost saving can be realised by the elimination of drip trays underneath the conveyors.

Another advantage of the method of the invention is that the use of a non-aqueous lubricant prevents microbiological growth and improves the overall hygienic standard.

The invention relates also to a method for moving at least partly in a transport direction (P1), at least one container, preferably a series of containers, by placing said container or containers on a moving conveyor lubricated according to a method of the invention, especially as disclosed hereabove, as well as in the attached claims.

The invention further relates to a conveyor (1) with means for lubricating at least one endless conveyor belt (3) in a method according to the invention as disclosed here above. The conveyor (1) comprises at least:
- at least one endless conveyor belt (3),
- at least one guiding element with at least one gliding face (11) for said at least one endless conveyor belt (3), said at least one guiding element being adapted for guiding the at least one endless conveyor belt at least partly in the transport direction (P1),
- at least one lubricant provider for providing the endless conveyor belt (3) with at least one lubricant, and
- at least a driving system for driving the conveyor belt along a continuous path comprising at least
a first path portion moving in accordance to said transport direction (P1), and a second path portion of said at least one endless belt (3) moving in a return direction (P2), whereby said conveyor belt comprises at least:
(a) a transport surface (7) adapted to support the at least one container to be moved according to the transport direction, and
(b) at least one guiding surface (10) opposite to the supporting face (8), whereby said at least one guiding surface (10) is adapted to have contact with at least one gliding face (11) of the guiding element.

The conveyor (1) further comprises a first distribution unit (13) adapted for applying lubricant, preferably intermittently, on a part of the transport surface (7) of the conveyor belt (3) during a part of the second path portion of the conveyor belt moving in the return direction, as well as a second distribution unit (14) adapted for applying lubricant, preferably intermittently, on a part of the guiding surface (10) of the conveyor belt (3) during a part of the second path portion of the conveyor belt moving in the return direction. Preferably the application of lubricant is operated at or substantially at the same part of the second conveyor path portion, for enabling preferably an intermittent simultaneous application of lubricant on both sides of the conveyor belt.

According to an advantageous embodiment, the first distribution unit (13) is placed facing a part of the transport surface (7) of the conveyor belt (3) during a part of the second path portion of the conveyor belt moving in the return direction, while the second distribution unit (14) is placed facing a part of the guiding surface (10) of the conveyor belt (3) during a part of the second path portion of the conveyor belt moving in the return direction. The first distribution unit is advantageously located under (or at least partly under) the part of the transport surface when lubricant has to be supplied thereto by the first distribution unit, while the second distribution unit is located above or at least partly above the part of the guiding surface when lubricant has to be supplied thereto by the second distribution unit.

Advantageously, the first and second distribution units (13,14) are placed the one with respect to the other, so that for a part of the conveyor belt (3), the second distribution unit is adapted to apply lubricant on the guiding surface (10) of said part, while the transport surface of said part opposite to the part of guiding surface, on which lubricant is applied, is lubricated by the first distribution unit.

According to a detail of an advantageous embodiment, the first distribution unit and the second distribution unit are located the one facing at least partly the other (the second distribution unit above the first distribution unit), while defining there between a free space in which the conveyor belt (3) is at least substantially vertically movable for a part of the second path portion of the conveyor belt moving in the return direction.

According to another detail of an embodiment, the lubrication surfaces (17,18) of both said distribution units (13,14) are in direct contact with respectively the said transport surface (7) and guiding surface (10) of the said conveyor belt (3) for a part of the second path portion of the conveyor belt moving in the return direction.

According to a further detail of an embodiment, the first distribution unit (13) has a lubrication surface (17) adapted to be in contact with a part of the conveyor belt (3) for a part of its second path portion in the return direction, when said conveyor belt (3) is moved, and wherein the second distribution unit (14) has at least one surface with at least one lubricant supply opening or is associated with at least one supply opening, whereby said lubricant supply opening is located away, preferably at least vertically spaced, from the guiding surface of the conveyor belt (3) for a part of its second path portion, when said conveyor belt (3) is moving.

According to still a further detail of an embodiment, the said first and second distribution units (13,14) are equipped with one or more measurement devices (22-28) for dosing the amount of lubricant to be supplied towards the transport surface (7) and to the guiding surface (10).

According to a specific detail, the said first and second distribution units (13,14) have each at least one integrated main channel (19, 24) and at least one secondary channel (19', 24', 30, 30') connected directly or indirectly to one of said integrated main channel (19,24) to conduct lubricant towards the transport surface (7) and to the guiding surface (10) of the conveyor belt (3) for a part of its second path portion.

The said main channels (19, 24) of both said first and second distribution units (13,14) can be part of a same lubricant circuit (29), or part of different or independent lubricant circuits.

According to a further embodiment, the conveyor (1) comprises a lubricating device which is modular, said lubricating device comprising at least two distribution units comprising each a body, whereby the bodies of said at least two distribution units are attached together.

Advantageously, the lubricating device (12) comprises at least two first distribution units (13) with their bodies attached the one to the other, and at least two second distribution units (14) with their bodies attached the one to the other, said lubricating device being adapted to lubricate at least two different conveyor belts (3).

Preferably, the distribution units (13,14) attached the one to the other have each integrated lubricant supply channel(s) extending in their body, whereby at least lubricant supply channels extending in the bodies of the distribution units attached the one to another are leak proof connected to each other.

According to an advantageous embodiment, the first and/or second distribution unit(s) (13,14) comprise(s) a body provided with or associated to a belt cleaner and/or belt rinser. The first and/or second distribution units form then a compact unit suitable for lubrication purposes as well as for cleaning and/or rinsing purposes. Advantageously said unit comprises a body with the necessary channels, possibly integrated channels, for supplying the lubricant and the cleaning liquid.

Preferably, the belt cleaner and/or rinser is selected from the group consisting of:
- at least one nozzle (43) connected to a main channel (41) extending in or associated to the body of the second distribution unit (14) for supplying said at least one nozzle (43) with at least one cleaning liquid and/or rinsing liquid, whereby said at least one nozzle (43) is adapted for directing cleaning liquid and/or rinsing liquid onto a part of the guiding surface (10) of the conveyor belt (3) moving in the transport direction,
- at least one nozzle (46) connected to a main channel (44) extending in or associated to the body of the first distribution unit (13) for supplying said at least one nozzle (46) with at least one cleaning liquid and/or rinsing liquid, whereby said at least one nozzle (46) is adapted for directing cleaning liquid and/or rinsing liquid onto a part of the transport surface (7) of the conveyor belt moving in the return direction,
- at least one nozzle connected to a main channel extending in or associated to the body of the distribution unit (14) for supplying said at least one nozzle with at least one cleaning liquid and/or rinsing liquid, whereby said at least one nozzle is adapted for directing cleaning liquid or rinsing liquid onto the guiding surface (10) of the conveyor belt moving in the return direction, and advantageously
- combinations thereof.

Specifically, the main (possibly integral) channel (41,44) is at least associated to a fitting connection (42) (advantageously an easy or quick fitting connection) for connecting said main channel (41,44) to a supply system or pipe adapted to supply cleaning liquid or rinsing liquid to said main channel (41,44) and/or to a main channel (41,44) of the body of another distribution unit.

According to a further detail of an embodiment, the conveyor comprises at least two different or independent conveyor belts (3), while the said main or possibly internal treatment channels (44) of the bodies of the first distribution units (13) connected the one to the other are leak proof connected the one to another and/or the said main or possibly internal treatment channels (41) of the bodies of the second distribution units (13) connected the one to the other are leak proof connected the one to another.

According to still a further embodiment, the conveyor comprises one or more conveyor belts adapted for transporting containers selected from the group consisting of bottles, cans, cardboard packages, vials and combinations thereof.

The invention still relates to a lubrication equipment specifically adapted for a conveyor according to the invention, said lubrication equipment comprising at least one first distribution unit (13) adapted for applying lubricant, preferably intermittently, on a part of the transport surface (7) of the conveyor belt when moving along a part of its second path portion and at least one second distribution unit (14) adapted for applying lubricant, preferably intermittently, on a part of the guiding surface (10) of the conveyor belt (3) when moving along a part of its second path portion.

The conveyor of the invention enables the transport of containers at a high speed, enabling therefor a high-speed operation or treatment thereof. The conveyor of the invention enables for example the transport of 35,000 bottles or even more per hour, said bottles being PET bottles containing 1 litre of water. The conveyor of the invention enables to achieve the line efficiency requirements by appropriate and controllable lubrication of the interface between the conveyor belt and the container (top lubrication), as well as a purposively lubrication of the interface between the conveyor belt and its gliding surface (bottom lubrication).

The invention relates thus also to a conveyor belt lubrication and cleaning and/or rinsing apparatus for a conveyor composed of one or more parallel endless conveyor belts driven by a rotating motor, where the container(s) are located on the transport surface of the conveyor belt and are moved into the transport direction and where at the return side the conveyor belt is free of any container load and is moved in the opposite direction, comprising lubricant distribution units fitted on the return side of the conveyor belt and meant to lubricate and clean the conveyor belt on its transport surface and guiding surface.

The conveyor belt can be guided between both distribution units, which are by preference fitted one above the other, comprising built-in lubricant measurement devices and integrated lubricant channels and injection points to add an appropriate amount of the recommended lubricant to the transport surface and to the guiding surface of the conveyor belt which moves between both said distribution units.

When moving through the distribution units the transport surface of the conveyor chain can be in full direct contact with the upper surface of the appropriate distribution unit resulting in a face to face direct contact lubrication through which an optimal spread of a minimum quantity of lubricant can be achieved.

Both distribution units also comprise separate integrated channels and built-up spray nozzles to allow an appropriate intermittent cleaning of the transport surface and the guiding surface of the conveyor belts.

Through the integration of cleaning features into the lubricant distribution units, there is no need anymore, as in the commonly used cleaning methods, to built separate cleaning infrastructure alongside the path of conveyors offering savings on capital expenditure.

Details and characteristics of preferred embodiments of the invention will appear from the following description, in which reference is made to the following drawings, which are given as example only. In said drawings, the conveyor belt is only schematically illustrated or only a segment thereof is illustrated.

### Brief description of the drawings

- Fig. 1 is a schematic perspective view, with partial cuttings, of a conveyor with a single conveyor belt;
- Fig. 2 is an enlarged perspective view of the detail marked "F2" in Figure 1;
- Fig. 3 is a cross sectional view along the line III-III of the conveyor of Figure 1;
- Fig. 4 is a cross sectional view along the line IV-IV of the conveyor of Figure 1;
- Fig. 5 is a cross sectional view along the line V-V of the conveyor of Figure 1 (line V-V also shown in figures 3 and 4);

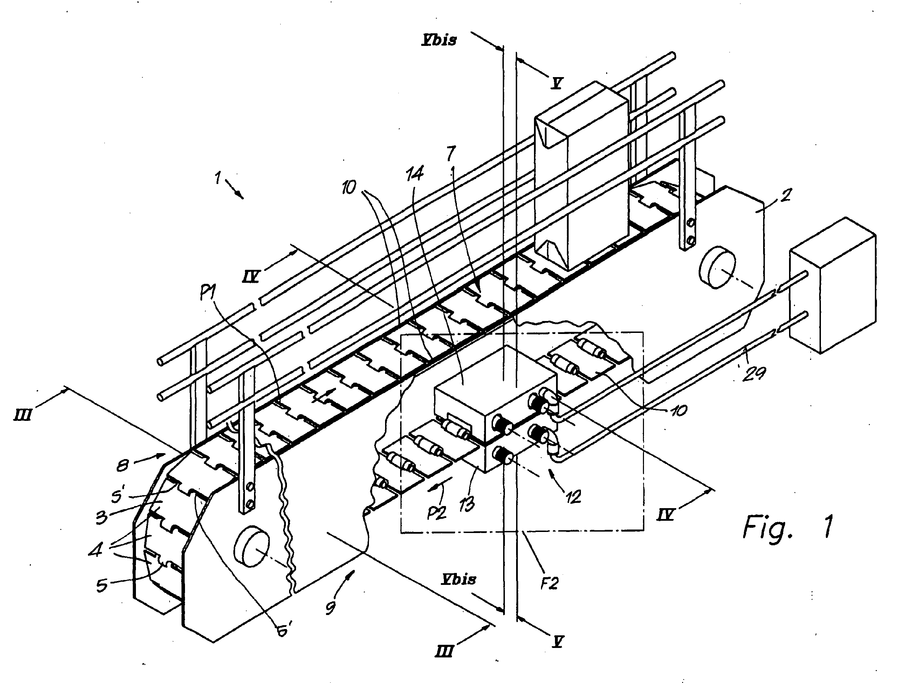

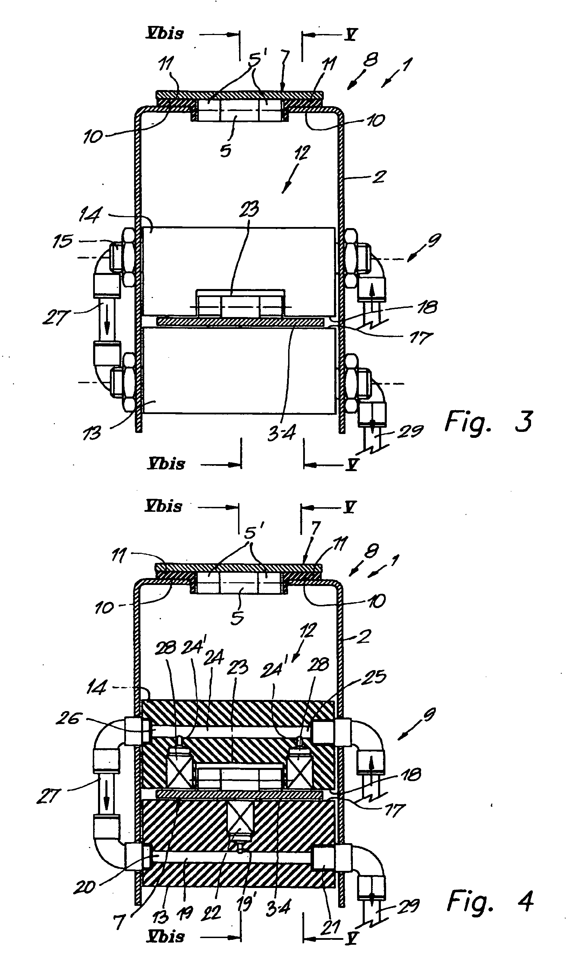

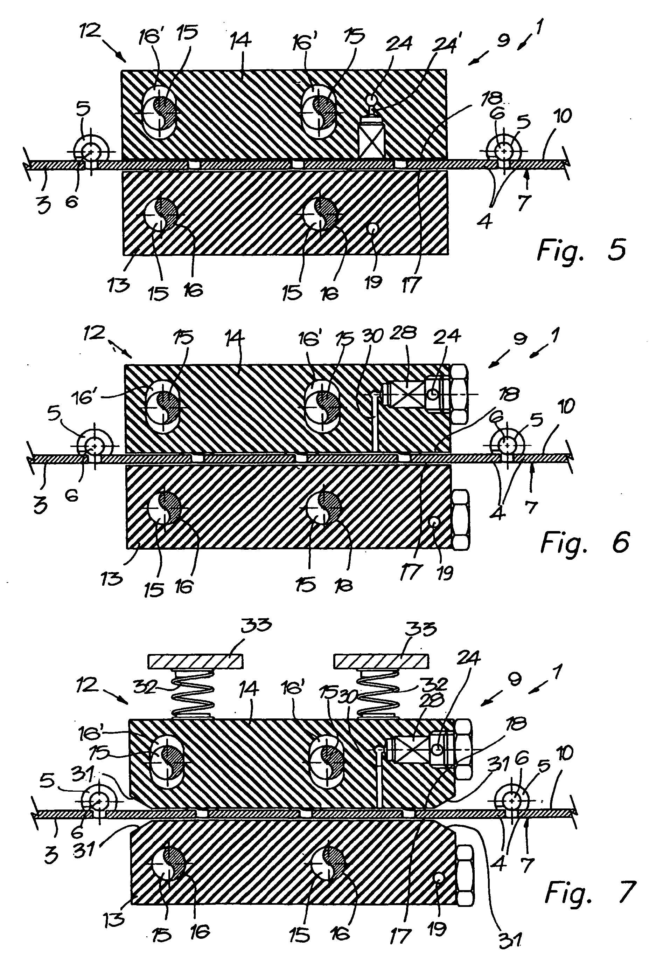

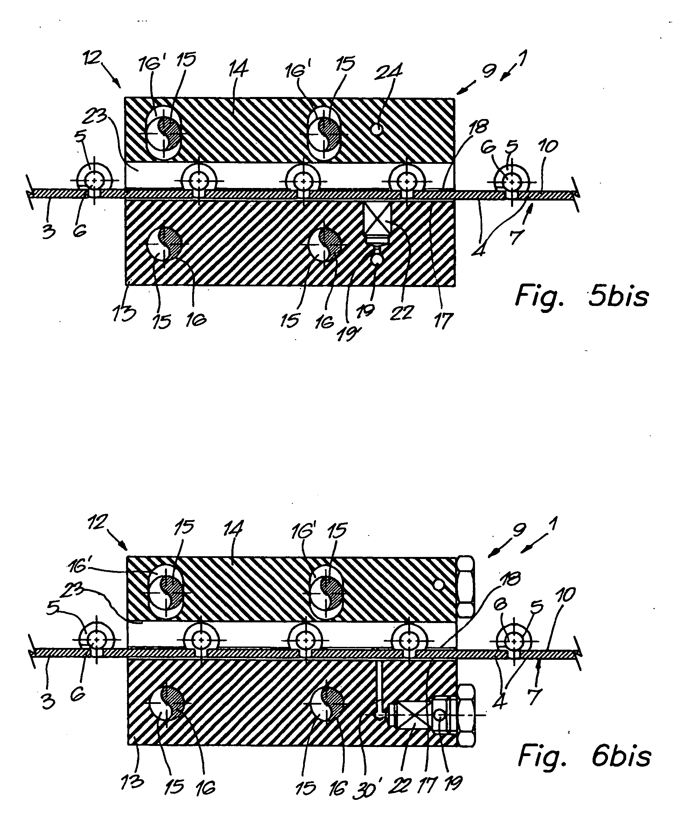

- Fig. 5bis is a cross sectional view along the line Vbis-Vbis of the conveyor of Figure 1 (line V-V also shown in figures 3 and 4);
- Fig. 6 is a view similar to Figure 5 for a first embodiment;
- Fig. 6bis is a view similar to Figure 5bis for the first embodiment of Figure 6;
- Fig. 7 is a view similar to Figure 5 for a second embodiment;

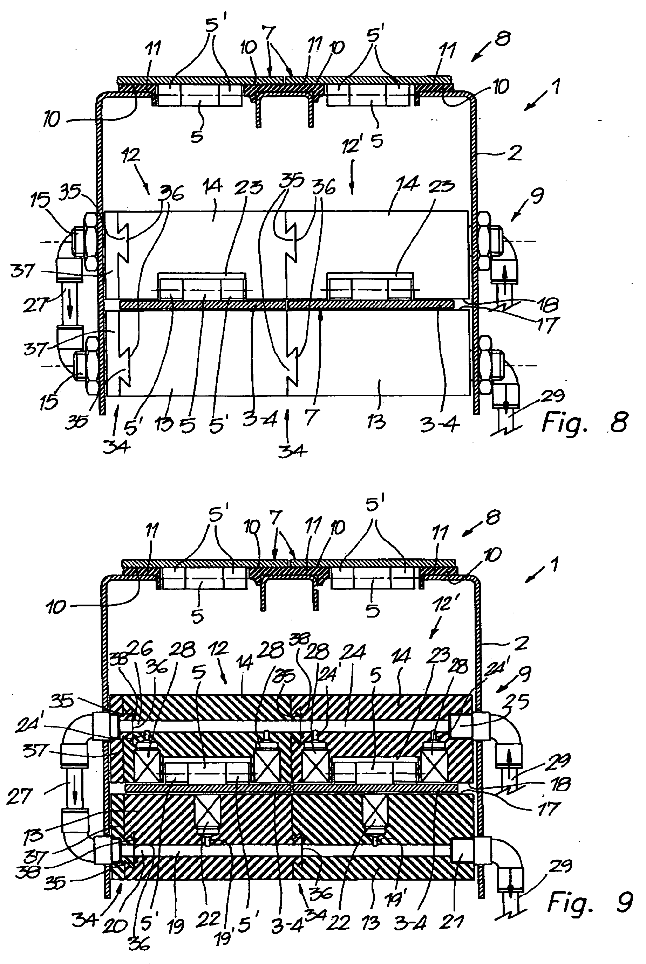

- Fig. 8 and Fig. 9 are respectively views similar to Figure 3 and Figure 4 for a conveyor provided with a double conveyor belt;

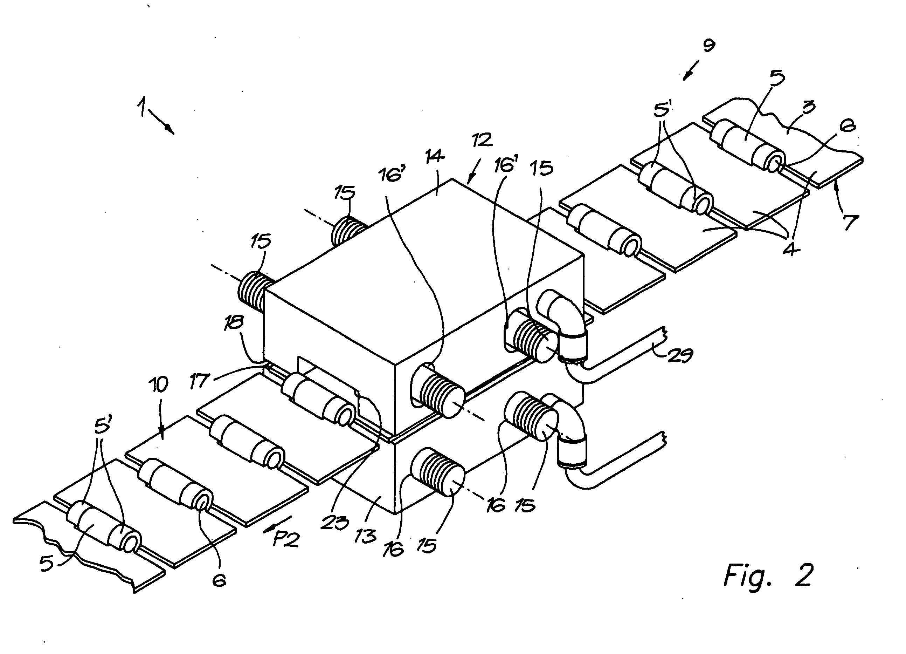

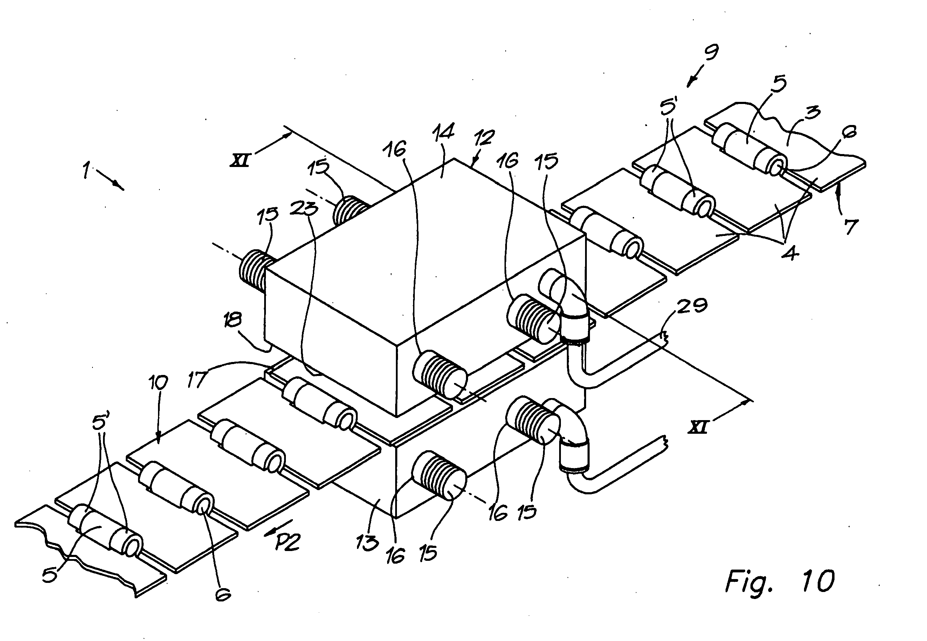

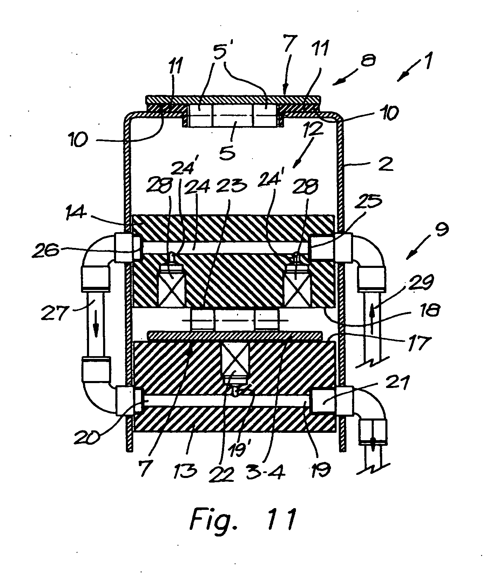

- Fig. 10 and Fig. 11 are views similar to Figure 2 and Figure 4 for a conveyor with the lubricant distribution units vertically spaced;

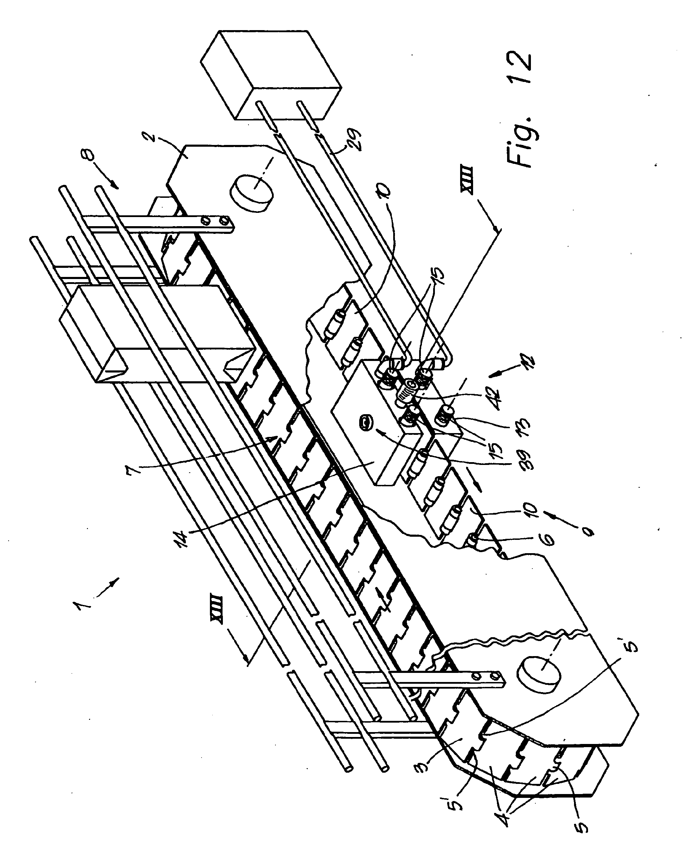

- Fig. 12 is a view similar to Figure 1 of a conveyor with lubricant distribution units without outside cut aways and vertically spaced, the lubrication means being associated to a bottom cleaner/rinser;

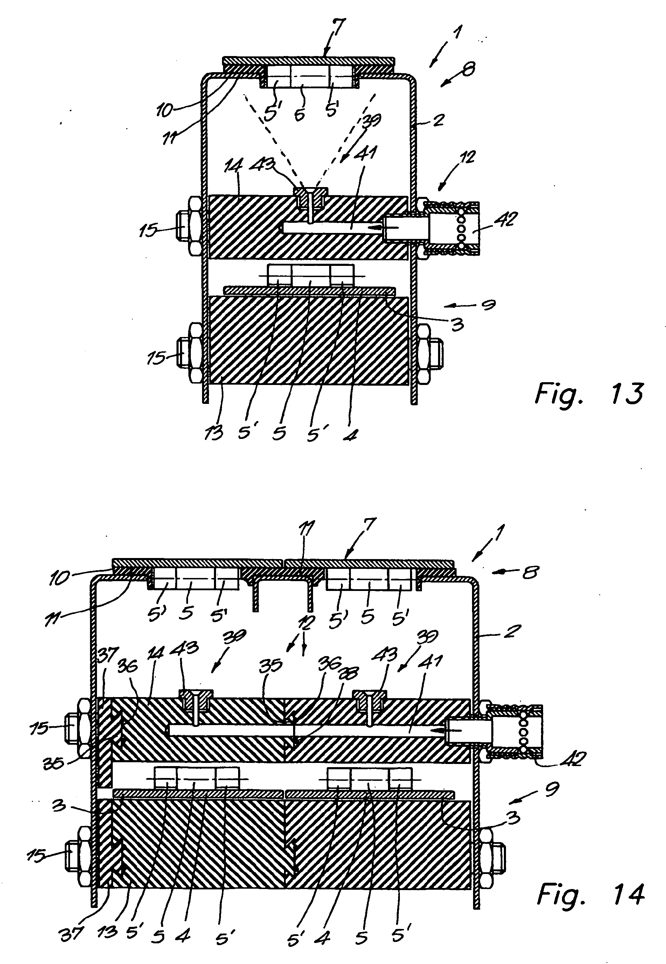

- Fig. 13 is a cross sectional view along the line XIII-XIII of the conveyor of Figure 12;
- Fig. 14 is a view similar to that of Figure 13 for a conveyor with a double conveyor belt;

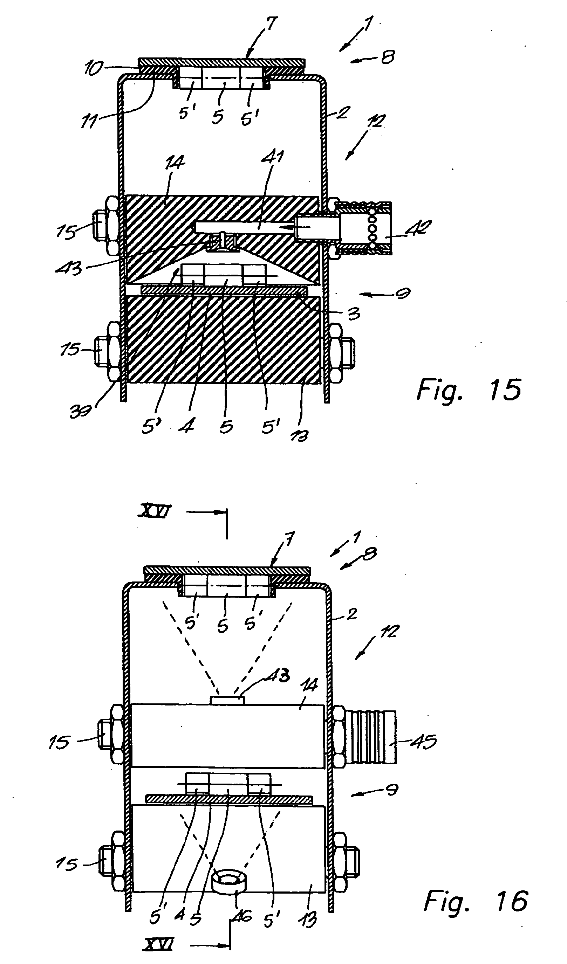

- Fig. 15 is a view similar to Figure 13 for a conveyor provided with lubricating means associated to another bottom cleaning/rinsing system,

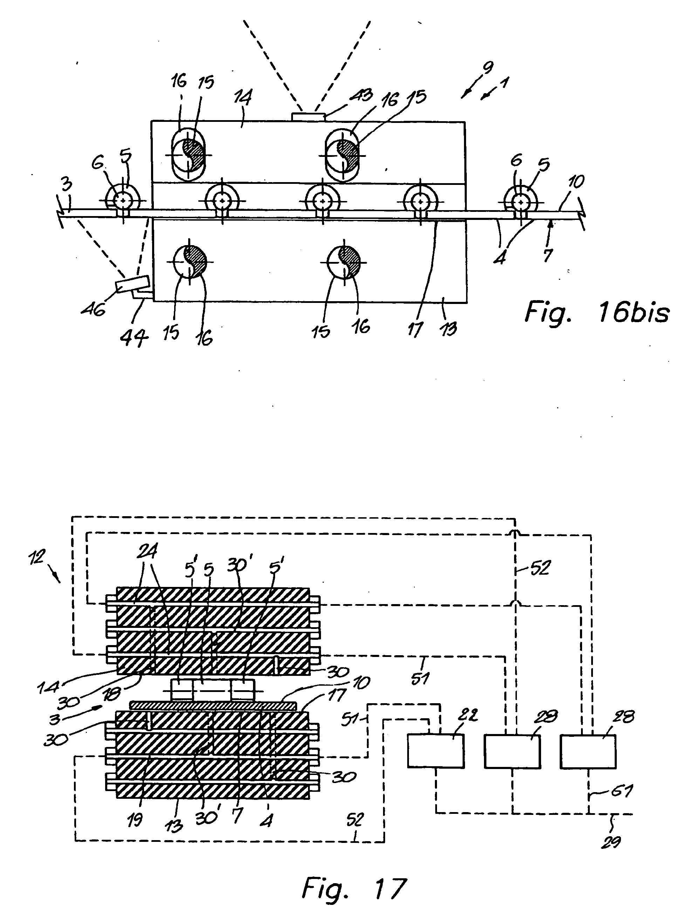

- Fig. 16 is a view similar to Figure 13 for a conveyor provided with a lubricating means associated to a bottom and top- cleaner/rinser,
- Fig. 16bis is a cross sectional view of the conveyor of Figure 16, along the line XVI-XVI, and
- Fig. 17 is a further schematic view of a lubricant equipment of the invention.

### Description of preferred embodiments

The description of preferred embodiments of the invention, illustrated or not in the attached drawings, will now here under be given.

Fig. 1 shows a conveyor 1 according to the invention which comprises a conveyor frame 2 and an endless conveyor belt 3 which is normally driven by a rotating motor; this power drive is not shown and is further of no importance for the invention.

As generally known the said belt 3 is composed of two opposite surfaces, a container contact surface or transport surface 7 which moves the containers on the conveyor transport side 8 into the direction marked by arrow P1, and a guiding surface 10 which is supported on the transport side 8 of the frame 2 by one or two parallel longitudinal conveyor guiding/gliding surfaces 11 carried by an upper face of the conveyor frame 2, said guiding surfaces 11 supporting the belt 3 with the transported containers(s) C.

As generally known, the conveyor 1 has a conveyor return side 9 where the endless belt 3 is free of containers and moved into the direction marked by arrow P2 opposite to the transport direction P1.

As generally known, the belt 3 can be a segmented flat belt composed of individual chain elements 4 linked to each other by mechanical linking parts 5 and 5'as illustrated in accompanying drawings (a pin 6 extending within the holes of said rings 5, 5'), or can be a continuous belt with non-mechanical links (such as chemical links, glue, welding, etc.) or can be a continuous belt combining mechanical and non-mechanical links. For example, one or more mechanical and/or chemical links connect ends of the belt or of portions of the belt together. It is obvious that it is possible to use any other construction complying with the transport requirements of the conveyor.

As shown in figure 3, the mechanical linking parts 5,5' of the belt 3 protrude below the flat chain element 4 for the transport path (P1). For said transport path P1, the mechanical linking parts 5, 5' are engaged in the longitudinal groove or opening extending between the two gliding surfaces 11. Said gliding surfaces 11 are advantageously profiled so that an upper face thereof acts as gliding face contacting the back side of the flat chain element 4, while a lateral face thereof acts as horizontal positioning guide to one end of a mechanical linking part 5'.

The conveyor 1 is equipped with a lubrication equipment 12 which is according the invention fitted on the return side 9 to the conveyor frame 2 (arrow P2).

As illustrated in Fig. 2 the lubrication equipment 12 basically comprises two distinct distribution units 13 and 14: the distribution unit 13 is fitted on the return side 9 underneath the belt 3 to lubricate the container contact surface 7, while the distribution unit 14 is fitted on the return side 9 above the belt 3 to lubricate the guiding surface 10.

Both distribution units 13 and 14 are preferably fitted above each other, as shown in the accompanied drawings, but can also be fitted in a longitudinal shoved position.

Fig. 2 shows an example of how both distribution blocks 13 and 14 can be fitted to the conveyor frame 2: two shafts 15 are crossing each distribution unit width wise through circular holes 16 and 16' from which, again as an example, the holes 16' are made in a sleeve form to allow vertical adjustments. The shafts 15 traverse also holes of the lateral plate of the frame 2. For maintaining the distribution units 13,14 in place with respect to the frame 2 by screwing bolts 15' on the end of the shafts 15. Any other suitable means to achieve a secured fixation of the distribution units is part of the invention.

In Figure 2, the units 13,14 are positioned spaced the one from the other so that the space between said units is minimal, while enabling the natural movement of the belt during the return path (direction of the arrow P2).

The lubrication surface 17 of the distribution unit 13 is located oppositely to, and preferably in direct contact with, the transport surface 7 of the conveyor belt 3. The lubrication surface 18 of the distribution unit 14 is located oppositely to, and as an example in direct contact with, the guiding surface 10 of the conveyor belt 3 opposite to the transport surface 7.

As shown in Fig. 3 and Fig. 4 the distribution units 13 and 14 have respectively a main lubricant supply duct 19 and 24 provided each with a lubricant supply inlet 20, 25 and a lubricant outlet 21, 26. Both main ducts 19 and 24 can have one or more secondary channels 19' and 24' which serve as means for directing lubricant towards or for supplying lubricant to integrated measurement/dosing systems or applicators 22 and 28 adapted for applying lubricant respectively on the transport face 7 of the belt 3 and on the guiding surface 10 of the belt 3. The outlet of the measurement/dosing devices or applicators 22 and 28 serve advantageously as lubricant injection points or nozzles for supplying lubricant to the transport surface 7 and to the guiding surfaces 10 of the belt 3, whereby enabling also the supply of lubricant onto the lubrication surfaces 17 and 18 of the distribution units 13 and 14. The supply of lubricant to said lubrication surfaces 17,18 is facilitated by the movement of the belt between the distribution units 13,14. Said lubrication surfaces act then as means for ensuring a good distribution of lubricant on the transport surface 7 and on the guiding surface 10 of the belt 3.

The outlet of the measurement/dosing device 22 of the distribution unit 13 is preferably in a central position in the width direction of the lubrication surface 17 of the distribution unit 13. Said outlet is thus adapted for applying lubricant in a central longitudinal area of the transport surface 7 of the belt 3, the lubrication surface 17 of the unit 13 acting then as means for distributing said lubricant applied centrally in the width (left direction and right direction) of the belts, or traverse the longitudinal direction or movement direction of the belt between the said two units 13,14.

For a segment type belt, as illustrated in accompanying drawings, it is preferred to provide the distribution unit 14 with two measurement/dosing devices 28. Said dosing supply devices 28 are positioned away from each other for lubricating the edges of the guiding surface 10 of the belt 3. The distribution unit 14 is provided with a central longitudinal cut away or groove 23 in which the protruding part of the linking parts 5,5' of some chain segments or elements 4 extend when the belt is moving. The outlet of the dosing devices 28 is located advantageously symmetrically with respect to the longitudinal direction on the left and on the right with respect to the central cut away or groove 23 ( preferably with an outlet on each side in the width direction of the lubrication surface 18 of the distribution unit 14).

As can be seen clearly in Fig. 3 and 4, the distribution units 13 and 14 can be connected to a same lubricant supply circuit 29 through a connection pipe or tube 27 connecting the outlet 26 to the inlet 20. Said lubricant supply circuit 29 is for example a circuit in which the lubricant is continuously or not at a pressure comprised for example between 5 10⁵ Pa and 30 10⁵ Pa, said pressure being selected for ensuring the flow of the required lubricant micro doses onto the surfaces to be lubricated. It is obvious that alternatively both distribution units 13 and 14, and consequently the respective measurement/dosing devices 22 and 28, can be connected to a separate lubricant supply circuit with either the same or a different lubricant.

A method for the lubrication of the conveyor belt 3 according to the invention is disclosed herebelow.

During operation, the conveyor belt 3 is driven continuously following an endless path comprising a first path portion or transport portion, and a second path portion or return portion. The belt 3 along its transport path (extending along the frame conveyor frame side 8) is adapted for moving container(s) C placed on its transport surface 7 into the direction marked by arrow P1.

When moving along the return path into the direction marked by arrow P2, the belt 3 passes between the distribution units 13 and 14 fitted in the frame conveyor return side 9, whereby a predetermined and adjustable amount of lubricant is added at selected moments or intermittently, to the transport surface 7 and the guiding surface 10 of the conveyor belt 3.

In this working test, the belt 3 was a flat-segmented polyacetal belt with a width of 82.5mm and with a total length of 12m. The belt 3 was driven by a motor with a speed variator enabling to adapt the belt speed between a minimum belt speed of 50cm per second and a maximum belt speed of 100cm per second. The belt was used for displacing PET water bottles of 1 and 2 litres.

The measurement or dosing devices 22 and 28 are preferably adjustable dosing units which release at each lubrication cycle, meaning at each pressure built-up in the circuit 29, a well defined predetermined amount of lubricant to the outlet of said devices 22,28 towards respectively the transport surface 7 of the belt 3 and the guiding surface 10 of the belt. Lubricant is then distributed in the width of the transport surface 7 of the belt 3 by contacting the lubrication surface 17 of the first distribution unit 13. The lubricant flowing from the dosing devices 28 are already well distributed along the longitudinal edge portions of the guiding surface 10. When the said edge portions are contacting the lubrication surface 18 of the distribution unit 14, a further distribution of the lubricant is ensured by said lubrication surface 18. The distance between the lubrication surface 17 of the first distribution unit 13 and the lubrication surface 18 of the second distribution unit 13 can be adapted by positioning the shafts 15 in the holes 16' of the body of the second distribution unit 14.

Through the preferably direct face to face contact between the transport surface 7 of the conveyor belt 3 and the lubrication surface 17 of the distribution unit 13, an effective first spread of the (preferably intermittently) released lubricant is achieved. A further spread is achieved through the moving containers on the transport side 8 of the conveyor 1. Consequently a microscopic thin layer of lubricant is generated on the transport surface 7.

Through a preferably non-direct contact between the conveyor guiding surface 10 of the conveyor belt 3 and the lubrication surface 18 of the distribution unit 14 (see Figures 10 and 11), a fraction of a drop of the (preferably intermittently) released lubricant is added to the conveyor guiding surface 10, for example to its longitudinal edge portions.

It is obvious that the described method of the invention ensures a very accurate and consistent minimal amount of the appropriate lubricant to lubricate the transport surface 7 and guiding surface 10.

It is also obvious that the lubricant remains on the conveyor and does not drip underneath keeping the floor clean, not generating permanent liquid waste products to be disposed of and eliminating the safety hazards caused by slippery working floors.

Compared to current available lubrication systems, the solid integrated modular construction of the lubrication apparatus 12 fitted in the return side 9 has no external equipment parts built up on the conveyor; consequently compared with current systems there is less exposure to possible damage and no hindrance during operation activities.

The lubrication apparatus 12 provides a purposive lubrication between the guiding surface 10 and the conveyor guiding surface 11 through which the wear and stick-slip phenomena are reduced and the lifetime of the conveyor belt 3 is significantly increased.

In said method, lubricant DLT-333 commercialised by CHP was used for lubricating the transport surface 7 and the guiding surface 10 of the belt 3. Said lubricant is a waterless lubricant adapted to adhere to the transport surface 7 and to the guiding surface 10 of the belt 3, said lubricant having a kinematical viscosity of minimum 15 centistokes at 20°C while being however liquid at 20°C. Said lubricant is preferably a food grade white mineral oil comprising PTFE (polytetrafluoroethylene).

In said method also, the coefficient of friction (COF) is determined in order to determine the settings of the measurement devices 22,28 and to determine the moments when lubricant has to be added. For example, for PET bottles, the lubrication method is operated so as to keep the COF between 0.03 and 0.12, for example between 0.05 and 0.10.

After an initial lubrication of the conveyor belt for PET bottles and after the driving of the conveyor belt for a few hours with some lubricant supply, the supply rate of lubricant supplied, preferably intermittently, to the transport surface 7 was comprised between 0.005 and 0.05 mm³ per cm² overall belt surface and per hour. For example, said supply rate was comprised between 0.01 and 0.04 mm³ per cm² overall belt surface and per hour. The supply rate of lubricant supplied to the guiding surface 10 was comprised between 0.0005 and 0.005 mm³ per cm² overall belt surface and per hour, such as a consumption rate of about 0.0025 mm³ per cm² overall belt surface and per hour.

Figure 6 illustrates a lubrication equipment comprising lubrication bodies 13,14 similar to the lubrication units 13,14 of figure 5, except that one or more measurement/dosing devices 22 and 28 and the main ducts of the distribution unit 13 and 14 have a different configuration. In said embodiment, the main lubricant ducts 19 and 24 serve as inlet devices respectively for the measurement/dosing devices 22 and 28 (the measurement/dosing device is directly mounted on a main duct), while secondary ducts 30 serve as outlet ducts for directing lubricant flowing from the dosing devices 22,28 towards the belt and/or to the lubrication surfaces 17 and 18 of the distribution units 13 and 14.

Fig. 7 gives another version of the lubrication equipment where the ends of the lubrication surfaces 17 and 18 of the distribution units 13 and 14 are bevelled. Furthermore, the equipment is provided with distribution units 13,14 that are movable the one with respect to the other so that the relative vertical position thereof can be adapted. In order to keep the distance between the lubrication surfaces 17,18 as low as possible, a return mechanism, such as a spring 32, is used. In the embodiment as shown, the distribution unit 13 is rigidly attached to the frame 2, while the distribution unit 14 is mounted vertically movable with respect to the frame 2. The distribution unit 14 is spring loaded by, for example, two springs 32 fitted between the top surface of the distribution unit 14 and frame parts 33 and 35 in order to secure, in this version, the direct surface contact between the lubrication surface 18 and the guiding surface 10.

Fig. 8 and 9 show a lubrication apparatus for a multiple belt conveyor. In these drawings, the conveyor 1 has two parallel conveyor belts 3. Each conveyor belt 3 is equipped with a lubrication device or equipment 12, 12', said lubrication equipment being similar to that shown in Figures 1 to 4. The lubrication devices or equipment's 12 and 12' of the adjacent parallel conveyor belts 3 are fitted to each other. The technical concept shown with two parallel belts is valid for an undefined number of parallel belts.

As exemplified in figures 8 and 9 the connection of adjacent lubrication devices 12 and 12' can be realised by using for example a clamp link on the longitudinal lateral sides 34 of the adjacent distribution units 13 and 14. Again referring to the figures 8 and 9, this clamp link can be realised through a swallow tail joint with a projection part 35 on one longitudinal lateral side and a complementary cut-away on the adjacent longitudinal lateral side 36.

The outside connections of a row of adjacent lubrication devices 12,12' to the lubricant circuit 29 can be done either directly through the appropriate fittings in the first and last distribution units 13 and 14, either through an accessory 37 fitted to the adjacent distribution unit 13 and 14.

The said integrated main lubricant channels 19 and 24 of adjacent lubrication devices 12 and 12' are connected to each other by gaskets 38 or any other suitable sealing mechanisms with a full pressure resistance to prevent any leakage of lubricant.

An advantage of the above described design is the standardised and modular type of construction of the lubrication devices 12-12' suitable for any width of a conveyor 1; through a limited amount of standardised parts 13, 14 and accessories, as for example part 37, a whole conveyor system can be equipped with the described lubrication equipment for enabling a lubrication in accordance to the method of invention.

It is obvious that basically lubrication devices 12 with a different width, for example when a multiple conveyor 1 is made up of conveyor belts with different widths, can be connected to each other in the same way as described.

In case of failure of one module 12 this can be easily replaced without dismantling the full conveyor lubrication equipment.

Figures 10 and 11 are views of lubrication equipment 12 of a conveyor belt 3 similar to the equipment 12 shown in Figures 2 and 4. In said embodiment, the distribution unit 14 is mounted at a minimum vertical distance above the guiding surface 10 of the conveyor belt 3. In said case the distance between the substantially horizontal surfaces 17,18 exceeds the maximal total thickness of the belt 3 (corresponding substantially to the height of the hinge connections between adjacent segmented flat elements of the conveyor belt 3). As illustrated, the lubrication surface 18 of the distribution unit 14 can be entirely flat, i.e. without central cut away or groove 23.

In this embodiment, the distribution unit 14 is stationary fitted onto the conveyor frame 2 by the shafts 15 and the bolts 15' screwed on the ends of said shafts 15. Lubricant is dropped from the outlet of the measurement/dosing device 28 on the guiding surface 10 of the conveyor belt 3. Instead of the fall of drops or part of drop of lubricant directly from the dosing devices 28 onto the guiding surface 10 of the conveyor belt, it is possible to use a distribution unit 14 of figure 14 comprising a duct 30 extending between the dosing device 28 and the surface 18 or up to a level below said surface 18. Said duct is thus acting for supplying lubricant onto the guiding surface 10 of the belt. Possibly the end of the duct can be shaped, so as to enable a better control of the drop of lubricant.

The intermittent supply of lubricant as a drop or a fraction of a drop to the guiding surface 10 of the belt 3 is spread out on the interface between the conveyor guiding surface 11 and the guiding surface 10 of the belt 3 on the transport side 8, when the guiding surface 10 of the belt 3 contacts said conveyor guiding surface 11.

With such an embodiment, in case of multiple parallel conveyor belts to be lubricated, the width of the different lubrication device 12 does not necessarily have to match with the width of each separate conveyor belt 3.

Figures 12 to 16 show a belt cleaning, rinsing and drying system which is integrated in the said lubrication device 12 fitted to the conveyor 1.

The distribution unit 14 (similar to that shown in figure 4, 5 or 6) is provided with a channel 41 with an external connection means 42 adapted to be connected to a supply of a treatment fluid, such as a mixture comprising a caustic foaming agent and rinsing water or any other desired treatment fluid. The channel 41 can also be connected to an air supply for drying purposes. In the latter case, advantageously the connection means 42 comprises a three-way valve system so as to enable the supply of air or the supply of a treatment and/or rinsing liquid(s) to the channel 41.

To impinge the guiding surface 10 of the conveyor belt with the treatment fluid, the channel 41 is provide with one or more spray nozzles 43 fitted on the upper side of the distribution unit 14 to impinge the guiding surface 10 of the moving conveyor belt 3 with a focused stream of the treatment fluid. Figure 13 shows this liquid treatment for a single belt conveyor 3. In said embodiment, the treatment liquid is sprayed upwardly towards the guiding surface 10 and the mechanical linking parts 5,5' linking the flat chain elements together.

Comparable with the lubrication device 12, for a multiple conveyor the channels 41 of each distribution unit 14 can be connected to each other by for example the same clamp links and sealing mechanisms. Figure 14 shows such a lubrication device with two cleaning spraying ends 43 for a double belt conveyor.

Fig. 15 shows an alternative embodiment of a lubrication device with at least a cleaning system with at least one nozzle directed towards the guiding surface 10 at the return side 9 of the conveyor belt 3.

The distribution unit 14 is provided with a duct 41 with an external connection means 43 for the supply of a treatment fluid such as a mixture of caustic foaming agent, rinsing water or any other desired treatment fluid. The duct 44 can also be connected to an air supply for drying purposes.

The bottom surface of the distribution unit 14 turned towards the guiding surface of the belt is shaped so that said guiding surface 10 with the linking parts 5,5' can be sprayed onto their complete width.

In Figures 16 and 16bis, the distribution unit 13 is associated with a cleaning system.

The distribution unit 13 is provided with a duct with an external connection means for the supply of a treatment fluid such as a mixture of caustic foaming agent, rinsing water or any other desired treatment fluid. The duct can also be connected to an air supply for drying purposes.

To impinge the transport surface 7 of the conveyor belt with the fluid, the channel or duct is connected to one or more spray nozzles 46 fitted fit to the distribution unit 13 to impinge the transport surface 10 of the moving conveyor belt 3 with a focused stream of the treatment fluid - Fig. 16 shows this for a single belt conveyor. Possibly one spray can be adapted to impinge the transport surfaces (10) of two adjacent belts 3.

Comparable with the lubrication device 12 for a multiple conveyor, the channels or ducts of each distribution unit 13 can be connected to each other by for example the same clamp links and sealing mechanisms.

In figures 16 and 16bis, both distribution units 13,14 are provided with cleaning/rinsing nozzles for ensuring the cleaning/rinsing of both opposite faces 7,10 of the conveyor belt 3, not necessarily, but for example a simultaneous cleaning of both opposite faces 7,10. Preferably, but not necessarily, the cleaning/rinsing of the opposite faces 7,10 will be carried out at the same moment. Figure 17 is a general schematic view of further lubricating equipment of the invention. The lubricating equipment 12 is similar to the lubricating equipment 12 of figure 6, except that:
- the distribution units 13, 14 comprises each ducts 30, 30' (in the example shown, with respect to the width of the unit 13 or 14, one central duct 30' and two ducts 30 away from the central width portion) for supplying lubricant towards the guiding surface 10 and towards the transport surface 7 of the belt 3, said ducts 30,30' being each associated to a main duct 19,24 extending in the body of the unit 13,14, the two open ends of the integral or main ducts 19,24 being provided with a connection system;
- dosing systems 22,28 such as micropumps, volumetric pumps, systems for generating a pressure in a circuit, etc,
- ducts 51,52 for connecting each dosing system 22, 28 to a main duct 19, 24 of a distribution unit 13,14, so as to form a circuit, and
- at least one lubricant supply 29, such as a duct, a reservoir, etc. for supplying each dosing system 22, 28 with lubricant, via pipes 61.

The main ducts 19, 24 of the units which are not connected to a dosing system are advantageously closed by sealers or stoppers 63 mounted on connection systems 42.

In this embodiment, each duct 30, 30' (used for lubrication) are associated to a distinct dosing system 22,28.

This embodiment is very efficient, as the distribution unit 13 is similar to the distribution unit 14, each unit having for example a duct 30' adapted to supply lubricant to the transport surface of the belt, and one or more ducts 30' adapted to supply lubricant to the guiding surface 10 of the belt 3. By reversing the position of the units 13, 14 in the equipment, the unit 13 placed above can thus be used for supplying lubricant to the guiding surface 10, while the unit 14 placed downwards can be used for the lubrication of the transport surface.

Further more, the ducts 19 of the unit 13 can possibly also be connected to a dosing system so as to supply lubricant at three different places of the transport surface 7.

In the lubrication method of the invention, non-aqueous based lubricants are preferably selected, said lubricants being most preferably qualified for accidental food contact (NSF-H1). Said lubricants have adequate general friction reduction properties and advantageously adhesive properties to the conveyor chain material of the transport surface 7 and the guiding surface 10 of the conveyor belt 3.

The viscosity of the lubricant is minimal 15 centistokes at 20°C.

A lubricant that complies with all above requirements is for example DLT-333 commercialised by CHP bvba.

The predetermination of the quantity settings of the dosing units in the measurement devices 22 and 28 is for example function of the individual friction requirements on the transport surface 7 and the guiding surface 10, which are mainly related to the type and length of and the load on the conveyor 1 and the conveyor belt 3.

The friction requirement on the transport surface 7 of the conveyor belt 3 is also depending upon the particular position of the concerned conveyor in the global conveying system; for example, a single conveyor at a bottle filler outlet does have higher friction reduction requirements in comparison with a multi line conveyor at the entrance of a bottle shrink wrapping machine.

The determination of the dosing rate of lubricant for PET bottle conveyors in order to meet particular low friction requirements (COF-value = Coefficient of Friction) has been defined through following test procedure:

In one of the tests, a single belt conveyor was equipped with a flat segmented polyacetal belt, width 82,5 mm and length 12 000 mm, and operated at variable speeds corresponding with a flow of 36 000 PET bottles of 1,00 litres filled with water and a flow of 30 000 PET bottles of 1,50 litres filled with water.

The lubricant used was DLT-333, basically a food grade white mineral oil with PTFE, wax and a particular additive package.

The bottles were filled with water and hold together by using a rack with a connection to a strain gauge in order to measure the traction force on the bottles when retained on the moving conveyor belt. The ratio friction force/weight of bottle gives the COF value.

Tests were done with various settings on the dosing units to achieve different lubrication rates on the interface between the transport surface 7 of the belt and the bottom of the PET container or bottle. Between each test the conveyor transport surface was manually cleaned.

In said test, for achieving COF values on the transport surface between 0,03 and 0,10, the lubricant consumption rate varied from 0,005 to 0,05 mm³/cm² overall belt surface and per hour for the lubrication of the transport surface; such a lubricant consumption being considerably lower than the known commonly used lubrication techniques.

Additionally a test circuit of 10 serial conveyor strokes with average 5 parallel conveyor belts per conveyor has been equipped with flat segmented Acetal belts of 82,5 mm width and average 12 000 mm length. The intermittent lubricant pressure built-up in the circuit 29 was generated by an external lubricant pump control unit.

The test demonstrated the ability of the equipment of the invention to individually determine the lubricant flow rate per conveyor chain and confirmed the above lubricant consumption rates and COF values.

Additionally this test demonstrated that the lubricant consumption rate to create an appropriate lubricity between the guiding surface 10 of the conveyor belt and the conveyor guiding surface 11 is between 0,001 and 0,005 mm³/cm² overall belt surface and per hour.

The test demonstrated also that a uniform microscopic lubricant layer is generated on the container contact surface of the conveyor belt 3 and this through the method of the application of lubricant by the lubrication apparatus 12 together with the multiple migration of traces of lubricant by the moving containers.

The tests have also shown that the control of the COF was quite easy. Indeed, after a lubrication step, the COF value decreased rapidly and was maintained to a low value for several minutes (5 to 15minutes or even more). After a lubrication step, the increase rate of the COF value was maintained reduced.

In the tests, the lubrication of the transport surface and of the guiding surface of the belt during the return path was carried out for a part of the return path not too far the transport path, i.e. not too far the place were the belt is rotated so as to move along the transport path.

While the foregoing description has set forth the preferred apparatuses of the invention in particular detail, it must be understood that numerous modifications, substitutions, and changes may be undertaken without departing from the scope of the present invention as defined by the ensuing claims.

## Claims

1. A method of lubricating a moving conveyor ensuring at least a movement of at least one container according to a transport direction (P1), whereby said conveyor (1) comprises at least:
- at least one endless conveyor belt (3),
- at least one guiding element with at least one gliding face (11) for said at least one endless conveyor belt (3), said at least one guiding element being adapted for guiding the at least one endless conveyor belt at least partly in the transport direction (P1),
- at least one lubricant provider for providing the endless conveyor belt (3) with at least one lubricant,
and
- at least a driving system for driving the conveyor belt along a continuous path comprising at least
a first path portion moving in accordance to said transport direction (P1), and a second path portion of said at least one endless belt (3) moving in a return direction (P2),
whereby said conveyor belt comprises at least:
(a) a transport surface (7) adapted to support the at least one container to be moved according to the transport direction, and
(b) at least one guiding surface (10) opposite to the transport surface (7), whereby said at least one guiding surface (10) is adapted to have contact with at least one gliding face (11) of the guiding element,
in which lubricant is applied, preferably intermittently, on a part of the transport surface (7) of the conveyor belt (3) during a part of the second path portion of the conveyor belt moving in the return direction, **characterized in that**, the lubricant is applied as well on a part of the guiding surface (10) of the conveyor belt (3) during a part of the second path portion of the conveyor belt moving in the return direction.

2. The method of claim 1, wherein said lubricant is a waterless lubricant adapted to adhere to the transport surface (7) and to the guiding surface (10) of the conveyor belt (3), wherein said lubricant has advantageously a viscosity of minimum 15 cSt. at 20°C.

3. The method of claim 2, wherein a same lubricant is applied, preferably intermittently, on a part of the transport surface (7) of the conveyor belt (3) during a part of the second path portion of the conveyor belt moving in the return direction, as well as on a part of the guiding surface (10) of the conveyor belt (3) during a part of the second path portion of the conveyor belt moving in the return direction, preferably during substantially a same part of the second path portion.

4. The method of anyone of the claims 1 to 3, wherein lubricant is applied, preferably intermittently, on a part of the transport surface (7) of the conveyor belt (3) during a part of the second path portion of the conveyor belt moving in the return direction at an application rate between 0,005 and 0,10 mm³/cm² overall belt surface and per hour, and on a part of the guiding surface (10) of the conveyor belt (3) during a part of the second path portion of the conveyor belt moving in the return direction at a rate between 0,0005 and 0,01 mm³/cm² overall belt surface and per hour.

5. The method of anyone of the claims 1 to 4, wherein lubricant is applied, preferably intermittently, on a part of the transport surface (7) of the conveyor belt (3) during a part of the second path portion of the conveyor belt moving in the return direction, advantageously at an application rate between 0,005 and 0,10 mm³/cm² overall belt surface and per hour, by applying, preferably intermittently, lubricant on a lubrication surface (17) and by moving a part of the conveyor belt (3) alongside said lubrication surface during a part of the second path portion of the conveyor belt moving in the return direction, and wherein lubricant is advantageously supplied intermittently to the lubrication surface (17) at specific supply time periods spaced the one from another by an intermediate period with no lubricant supply, whereby no lubricant is supplied to the lubrication surface for intermediate periods advantageously of at least 5 minutes, preferably at least 10 minutes, most preferably at least 15 minutes.

6. The method of anyone of the claims 1 to 5, wherein lubricant is supplied intermittently at specific supply time periods on successive parts of the guiding surface (10) of the conveyor belt (3) during a part of the second path portion of the conveyor belt moving in the return direction, advantageously at a rate between 0,0005 and 0,01 mm³/cm² overall belt surface and per hour, whereby no lubricant is supplied to the guiding surface (10) for intermediate periods between two successive supply time periods, said intermediate periods with no lubricant supply being advantageously of at least 5 minutes, preferably at least 10 minutes, most preferably at least 15 minutes.

7. The method of claims 5 and 6, in which lubricant is supplied on parts of the guiding surface (10) of the conveyor belt (3) during a part of the second path portion of the conveyor belt moving in the return direction, by dropping at least one tenth of a drop (1/10), preferably at least one third of a drop (one third of a drop corresponding to about 10mm³) of lubricant at specific supply time periods on said guiding surface (10), and in which at said specific supply time periods, lubricant is advantageously supplied to the lubrication surface (17), as well as to a part of the guiding surface (10) of the conveyor belt (3) during a part of the second path portion of the conveyor belt moving in the return direction, preferably at a same part or substantially at the same part of the second path portion.

8. The method of anyone of the claims 1 to 7, in which at least one parameter function of the friction is at least estimated, in which said at least estimated parameter is compared with at least one value corresponding to a maximal admissible friction, whereby when the estimated parameter corresponds to a friction above the said maximal admissible friction, lubricant is applied, preferably intermittently, on a part of the transport surface (7) of the conveyor belt (3) during a part of the second path portion of the conveyor belt moving in the return direction up to achieving an estimated parameter corresponding to a friction lower than said maximal admissible friction, said parameter corresponding advantageously to or is function of the coefficient of friction (COF), while the value corresponding to the maximal admissible friction is advantageously a value corresponding to or function of a coefficient of friction from 0.03 to 0.25.

9. A method for moving at least partly in a transport direction (P1), at least one container, preferably a series of containers, by placing said container or containers on a moving conveyor lubricated according to a method of anyone of the claims 1 to 8.

10. A conveyor (1) with means for lubricating at least one endless conveyor belt (3), advantageously one or more conveyor belts adapted for transporting containers selected from the group consisting of bottles, cans, cardboard packages, vials and combinations thereof, in a method according to anyone of the claims 1 to 8, said conveyor (1) comprising at least:
- at least one endless conveyor belt (3),
- at least one guiding element with at least one gliding face (11) for said at least one endless conveyor belt (3), said at least one guiding element being adapted for guiding the at least one endless conveyor belt at least partly in the transport direction (P1),
- at least one lubricant provider for providing the endless conveyor belt (3) with at least one lubricant, and
- at least a driving system for driving the conveyor belt along a continuous path comprising at least a first path portion moving in accordance to said transport direction (P1), and a second path portion of said at least one endless belt (3) moving in a return direction (P2), whereby said conveyor belt comprises at least:
(a) a transport surface (7) adapted to support the at least one container to be moved according to the transport direction, and
(b) at least one guiding surface (10) opposite to the supporting face (8), whereby said at least one guiding surface (10) is adapted to have contact with at least one gliding face (11) of the guiding element,
whereby said conveyor (1) further comprises a first distribution unit (13) adapted for applying lubricant, preferably intermittently, on a part of the transport surface (7) of the conveyor belt (3) during a part of the second path portion of the conveyor belt moving in the return direction, **characterized in that**, said conveyor further comprises a second distribution unit (14) adapted for applying lubricant, preferably intermittently, on a part of the guiding surface (10) of the conveyor belt (3) during a part of the second path portion of the conveyor belt moving in the return direction.

11. The conveyor (1) of claim 10, wherein the first distribution unit (13) is placed facing a part of the transport surface (7) of the conveyor belt (3) for a part of the second path portion of the conveyor belt moving in the return direction, while the second distribution unit (14) is placed facing a part of the guiding surface (10) of the conveyor belt (3) for a part of the second path portion of the conveyor belt moving in the return direction.

12. The conveyor (1) according to claim 10 or 11, wherein the first and second distribution units (13,14) are placed the one with respect to the other, so that for a part of the conveyor belt (3), the second distribution unit (14) is adapted to apply lubricant on the guiding surface (10) of said part, while the transport surface (7) of said part opposite to the part of guiding surface (10) on which lubricant is applied, can be simultaneously lubricated by the first distribution unit (13).

13. The conveyor (1) according to any one of the claims 10 to 12, in which the first distribution unit (13) and the second distribution unit (14) are located the one at least substantially above the other, while defining there between a free space in which the conveyor belt (3) is at least substantially vertically movable for a part of the second path portion of the conveyor belt moving in the return direction.

14. The conveyor (1) according to anyone of the claims 10 to 13, wherein the lubrication surfaces (17,18) of both said distribution units (13,14) are in direct contact with respectively the said transport surface (7) and guiding surface (10) of the said conveyor belt (3) for a part of the second path portion of the conveyor belt moving in the return direction.

15. The conveyor (1) according to anyone of the claims 10 to 13, wherein the first distribution unit (13) has a lubrication surface (17) adapted to be in contact with a part of the conveyor belt (3) for a part of its second path, when said conveyor belt (3) is moved, and wherein the second distribution unit (14) has at least one surface with at least one lubricant supply opening which is located away, preferably vertically spaced from the guiding surface of the conveyor belt (3) for a part of its second path, when said conveyor belt (3) is moving.

16. The conveyor (1) according to anyone of the claims 10 to 15, wherein the said first and second distribution units (13,14) are equipped with one or more measurement devices (22,28) for dosing the amount of lubricant to be supplied towards the transport surface (7) and to the guiding surface (10).

17. The conveyor (1) according to anyone of the claims 10 to 16, wherein the said first and second distribution units (13,14) have each at least one main channel (19, 24) and can have at least one secondary channel (19', 24', 30, 30') connected directly or indirectly to one of said main channels (19,24) to conduct lubricant towards the transport surface (7) and to the guiding surface (10) of the conveyor belt (3) for a part of its second path portion,
wherein the said main channels (19, 24) of both said first and second distribution units (13,14) are part of a same lubricant circuit (29) or wherein the main channel (19) of the first distribution unit(s) (13) and the said main channel (24) of the second distribution unit(s) (14) are part of different or independent lubricant circuits.

18. The conveyor (1) according to anyone of the claims 10 to 17, which comprises a lubricating device which is modular, said lubricating device comprising at least two distribution units comprising each a body, whereby the bodies of said at least two distribution units are attached together, wherein the distribution units (13,14) attached the one to the other have advantageously each lubricant supply channel(s) extending in or associated to their body, whereby at least lubricant supply channels extending in or associated to the bodies of the distribution units attached the one to another are leak proof connected to each other.

19. The conveyor (1) according to anyone of the claims 10 to 18, in which the first and/or second distribution unit(s) comprise(s) a body provided with a belt cleaner and/or belt rinser, whereby the belt cleaner and/or rinser is advantageously selected from the group consisting of :
- at least one nozzle (43) connected to a main channel (41) extending in or associated to the body of the second distribution unit (14) for supplying said at least one nozzle (43) with at least one cleaning liquid and/or rinsing liquid, whereby said at least one nozzle (43) is adapted for directing cleaning liquid and/or rinsing liquid onto a part of the guiding surface (10) of the conveyor belt (3) moving in the transport direction,
- at least one nozzle (46) connected to a main channel (44) extending in or associated to the body of the first distribution unit (13) for supplying said art least one nozzle (46) with at least one cleaning liquid and/or rinsing liquid, whereby said at least one nozzle (46) is adapted for directing cleaning liquid and/or rinsing liquid onto a part of the transport surface (7) of the conveyor belt moving in the return direction,
- at least one nozzle connected to a main channel extending in or associated to the body of the distribution unit (14) for supplying said at least one nozzle with at least one cleaning liquid and/or rinsing liquid, whereby said at least one nozzle is adapted for directing cleaning liquid or rinsing liquid onto the guiding surface (10) of the conveyor belt moving in the return direction, and advantageously
- combinations thereof,
in which the main channel (41,44) is advantageously at least associated to a fitting connection (42) for connecting said main channel (41,44) to a supply pipe adapted to supply cleaning liquid to said main channel (41,44) and/or to a main channel (41,44) of the body of another distribution unit.

20. The conveyor (1) according to the claims 18 and claim 19, wherein the conveyor comprises at least two different or independent conveyor belts (3) and wherein the said treatment channels (44) of the bodies of the first distribution units (13) connected the one to the other are leak proof connected the one to another and/or the said treatment channels (41) of the bodies of the second distribution units (13) connected the one to the other are leak proof connected the one to another.

21. A lubrication equipment specifically adapted for a conveyor according to anyone of the claims 10 to 20, said lubrication equipment comprising at least one first distribution unit (13) adapted for applying lubricant, preferably intermittently, on a part of the transport surface (7) of the conveyor belt when moving along a part of its second path portion and at least one second distribution unit (14) adapted for applying lubricant, preferably intermittently, on a part of the guiding surface (10) of the conveyor belt (3) when moving along a part of its second path portion,

## Patentansprüche

1. Verfahren zum Schmieren eines sich bewegenden Förderers, der zumindest eine Bewegung zumindest eines Behälters gemäß einer Transportrichtung (P1) sicherstellt, wobei der Förderer (1) zumindest umfasst:
- zumindest ein Endlosförderband (3),
- zumindest ein Führungselement mit zumindest einer Gleitseite (11) für das zumindest eine Endlosförderband (3), wobei das zumindest eine Führungselement zum Führen des zumindest einen Endlosförderbandes zumindest teilweise in der Transportrichtung (P1) angepasst ist,
- zumindest einen Schmiermittellieferer zum Beliefern des Endlosförderbandes (3) mit zumindest einem Schmiermittel, und
- zumindest ein Antriebssystem zum Antrieb des Förderbandes entlang eines kontinuierlichen Pfades, der zumindest einen ersten Pfadabschnitt, der sich gemäß der Transportrichtung (P1) bewegt, und einen zweiten Pfadabschnitt des zumindest einen Endlosbandes (3) umfasst, der sich in einer Rückführrichtung (P2) bewegt, wobei das Förderband zumindest umfasst:
(a) eine Transportfläche (7), die derart angepasst ist, dass sie den zumindest einen Behälter, der gemäß der Transportrichtung zu bewegen ist, trägt, und
(b) zumindest eine Führungsfläche (10) gegenüberliegend der Transportfläche (7), wobei die zumindest eine Führungsfläche (10) derart angepasst ist, dass sie einen Kontakt mit zumindest einer Gleitseite (11) des Führungselementes besitzt,
wobei Schmiermittel bevorzugt intermittierend auf einen Teil der Transportfläche (7) des Förderbandes (3) während eines Teils des sich in der Rückführrichtung bewegenden zweiten Pfadabschnittes des Förderbandes aufgetragen wird, **dadurch gekennzeichnet, dass** das Schmiermittel genauso auf einen Teil der Führungsfläche (10) des Förderbandes (3) während eines Teils des sich in der Rückführrichtung bewegenden zweiten Pfadabschnittes des Förderbandes aufgetragen wird.

2. Verfahren nach Anspruch 1,
wobei das Schmiermittel ein wasserloses Schmiermittel ist, das derart angepasst ist, dass es an der Transportfläche (7) und der Führungsfläche (10) des Förderbandes (3) anhaftet, wobei das Schmiermittel vorteilhafterweise eine Viskosität von minimal 15 cSt. bei 20°C besitzt.

3. Verfahren nach Anspruch 2,
wobei dasselbe Schmiermittel bevorzugt intermittierend an einen Teil der Transportfläche (7) des Förderbandes (3) während eines Teils des sich in der Rückführrichtung bewegenden zweiten Pfadabschnittes des Förderbandes wie auch auf einen Teil der Führungsfläche (10) des Förderbandes (3) während eines Teils des sich in der Rückführrichtung bewegenden zweiten Pfadabschnittes des Förderbandes bevorzugt während im Wesentlichen einem selben Teil des zweiten Pfadabschnittes aufgetragen wird.

4. Verfahren nach einem der Ansprüche 1 bis 3,
wobei Schmiermittel bevorzugt intermittierend auf einen Teil der Transportfläche (7) des Förderbandes (3) während eines Teils des sich in der Rückführrichtung bewegenden zweiten Pfadabschnittes des Förderbandes mit einer Auftragungsrate zwischen 0,005 und 0,10 mm³/cm² Gesamtbandfläche und pro Stunde und auf einen Teil der Führungsfläche (10) des Förderbandes (3) während eines Teils des sich in der Rückführrichtung bewegenden zweiten Pfadabschnittes des Förderbandes mit einer Rate zwischen 0,0005 und 0,01 mm³/cm² Gesamtbandfläche und pro Stunde aufgetragen wird.

5. Verfahren nach einem der Ansprüche 1 bis 4,
wobei Schmiermittel bevorzugt intermittierend auf einem Teil der Transportfläche (7) des Förderbandes (3) während eines Teils des sich in der Rückführrichtung bewegenden zweiten Pfadabschnittes des Förderbandes vorteilhafterweise mit einer Auftragungsrate zwischen 0,005 und 0,10 mm³/cm² Gesamtbandfläche und pro Stunde, durch bevorzugt intermittierend erfolgendes Auftragen von Schmiermittel auf eine Schmiermittelfläche (17) und durch Bewegen eines Teils des Förderbandes (3) entlang der Schmierfläche während eines Teils des sich in der Rückführrichtung bewegenden zweiten Pfadabschnittes des Förderbandes aufgetragen wird, und wobei Schmiermittel vorteilhafterweise intermittierend an die Schmierfläche (17) bei spezifischen Lieferzeitperioden geliefert wird, die voneinander durch eine Zwischenperiode ohne Schmiermittellieferung beabstandet sind, wobei kein Schmiermittel an die Schmierfläche für Zwischenperioden vorteilhafterweise von zumindest 5 Minuten, bevorzugt zumindest 10 Minuten, am bevorzugtesten zumindest 15 Minuten geliefert wird.

6. Verfahren nach einem der Ansprüche 1 bis 5,
wobei Schmiermittel intermittierend bei spezifischen Lieferzeitperioden an aufeinanderfolgenden Teile der Führungsfläche (10) des Förderbandes (3) während eines Teils des sich in der Rückführrichtung bewegenden zweiten Pfadabschnittes des Förderbandes vorteilhafterweise mit einer Rate zwischen 0,0005 und 0,01 mm³/cm² Gesamtbandfläche und pro Stunde geliefert wird, wobei kein Schmiermittel an die Führungsfläche (10) für Zwischenperioden zwischen zwei aufeinanderfolgenden Lieferzeitperioden geliefert wird, wobei die Zwischenperioden ohne Schmiermittellieferung vorteihafterweise zumindest 5 Minuten, bevorzugt zumindest 10 Minuten, am bevorzugtesten zumindest 15 Minuten betragen.

7. Verfahren nach einem der Ansprüche 5 oder 6,
wobei Schmiermittel an Teile der Führungsfläche (10) des Förderbandes (3) während eines Teils des sich in der Rückführrichtung bewegenden zweiten Pfadabschnittes des Förderbandes durch Auftropfen zumindest eines Zehntels eines Tropfens (1/10), bevorzugt zumindest eines Drittels eines Tropfens (ein Drittel eines Tropfens entspricht etwa 10 mm³) an Schmiermittel bei spezifischen Lieferzeitperioden auf die Führungsfläche (10) geliefert wird, und wobei bei den spezifischen Lieferzeitperioden Schmiermittel bevorzugt an die Schmierfläche (17) wie auch ein Teil der Führungsfläche (10) des Förderbandes (3) während eines Teils des sich in der Rückführrichtung bewegenden zweiten Pfadabschnittes des Förderbandes bevorzugt bei einem selben Teil oder im Wesentlichen demselben Teil des zweiten Pfadabschnittes geliefert wird.

8. Verfahren nach einem der Ansprüche 1 bis 7,
wobei zumindest eine Parameterfunktion der Reibung zumindest geschätzt wird, wobei der zumindest geschätzte Parameter mit zumindest einem Wert, der einer maximal zulässigen Reibung entspricht, verglichen wird, wobei, wenn der geschätzte Parameter einer Reibung oberhalb der maximal zulässigen Reibung entspricht, Schmiermittel bevorzugt intermittierend auf einen Teil der Transportfläche (7) des Förderbandes (3) während eines Teils des sich der Rückführrichtung bewegenden zweiten Pfadabschnittes des Förderbandes bis zu einem Erreichen eines geschätzten Parameters geliefert wird, der einer Reibung entspricht, die geringer als die maximal zulässige Reibung ist, wobei der Parameter bevorzugt dem Reibungskoeffizienten (COF) entspricht oder eine Funktion desselben ist, während der der maximal zulässigen Reibung entsprechende Wert vorteilhafterweise ein Wert ist, der einem Reibungskoeffizienten von 0,03 bis 0,25 entspricht oder eine Funktion dessen ist.

9. Verfahren zum zumindest teilweisen Bewegen zumindest eines Behälters, bevorzugt einer Reihe von Behältern, in einer Transportrichtung (P1) durch Anordnen des Behälters oder der Behälter auf einem sich bewegenden Förderer, der gemäß einem Verfahren nach einem der Ansprüche 1 bis 8 geschmiert wird.

10. Förderer (1) mit einem Mittel zum Schmieren zumindest eines Endlosförderbandes (3), bevorzugt eines oder mehrerer Förderbänder, die zum Transport von Behältern angepasst sind, die
aus der Gruppe gewählt sind, die Flaschen, Dosen, Kartonverpackungen, Fläschchen und Kombinationen daraus umfasst, in einem Verfahren nach einem der Ansprüche 1 bis 8, wobei der Förderer (1) zumindest umfasst:
- zumindest ein Endlosförderband (3),
- zumindest ein Führungselement mit zumindest einer Gleitseite (11) für das zumindest eine Endlosförderband (3), wobei das zumindest eine Führungselement zum Führen des zumindest einen Endlosförderbandes zumindest teilweise in der Transportrichtung (P1) angepasst ist,
- zumindest einen Schmiermittellieferer zum Beliefern des Endlosförderbandes (3) mit zumindest einem Schmiermittel,
und
- zumindest ein Antriebssystem zum Antrieb des Förderbandes entlang eines kontinuierlichen Pfades, der zumindest einen ersten Pfadabschnitt, der sich gemäß der Transportrichtung (P1) bewegt, und einen zweiten Pfadabschnitt des zumindest einen Endlosbandes (3) umfasst, der sich in einer Rückführrichtung (P2) bewegt, wobei das Förderband zumindest umfasst:
(a) eine Transportfläche (7), die derart angepasst ist, dass sie den zumindest einen Behälter, der gemäß der Transportrichtung zu bewegen ist, trägt, und
(b) zumindest eine Führungsfläche (10) entgegengesetzt der tragenden Seite (8), wobei die zumindest eine Führungsfläche (10) derart angepasst ist, dass sie einen Kontakt mit zumindest einer Gleitseite (11) des Führungselementes aufweist,
wobei der Förderer (1) ferner eine erste Verteilungseinheit (13) umfasst, die zum Aufbringen von Schmiermittel bevorzugt intermittierend auf ein Teil der Transportfläche (7) des Förderbandes (3) während eines Teils des sich in der Rückführrichtung bewegenden zweiten Pfadabschnittes des Förderbandes angepasst ist, **dadurch gekennzeichnet, dass** der Förderer ferner eine zweite Verteilungseinheit (14) umfasst, die zum Auftragen von Schmiermittel bevorzugt intermittierend auf einen Teil der Führungsfläche (10) des Förderbandes (3) während eines Teils des sich in der Rückführrichtung bewegenden zweiten Pfadabschnittes des Förderbandes angepasst ist.

11. Förderer (1) nach Anspruch 10,
wobei die erste Verteilungseinheit (13) für einen Teil des sich in der Rückführrichtung bewegenden zweiten Pfadabschnittes des Förderbandes zu einem Teil der Transportfläche (7) des Förderbandes (3) weisend angeordnet ist, während die zweite Verteilungseinheit (14) für einen Teil des sich in der Rückführrichtung bewegenden zweiten Pfadabschnittes des Förderbandes zu einem Teil der Führungsfläche (10) des Förderbandes (3) weisend angeordnet ist.

12. Förderer (1) nach einem der Ansprüche 10 oder 11,
wobei die erste und zweite Verteilungseinheit (13, 14) in Bezug zueinander so angeordnet sind, dass für einen Teil des Förderbands (3) die zweite Verteilungseinheit (14) angepasst ist, Schmiermittel auf die Führungsfläche (10) des Teiles aufzubringen, während die Transportfläche (7) des Teiles gegenüberliegend dem Teil der Führungsfläche (10), auf den das Schmiermittel aufgetragen wird, gleichzeitig durch die erste Verteilungseinheit (13) geschmiert werden kann.

13. Förderer (1) nach einem der Ansprüche 10 bis 12,
wobei die erste Verteilungseinheit (13) und die zweite Verteilungseinheit (14) so angeordnet sind, dass eine zumindest im Wesentlichen über der anderen liegt, während dazwischen ein freier Raum definiert wird, in dem das Förderband (3) für einen Teil des sich in der Rückführrichtung bewegenden zweiten Pfadabschnittes des Förderbandes zumindest im Wesentlichen vertikal bewegbar ist.

14. Förderer (1) nach einem der Ansprüche 10 bis 13,
wobei die Schmierflächen (17, 18) der beiden Verteilungseinheiten (13, 14) in direktem Kontakt mit jeweils der Transportfläche (7) und Führungsfläche (10) des Förderbandes (3) für einen Teil des sich in der Rückführrichtung bewegenden zweiten Pfadabschnittes des Förderbandes stehen.

15. Förderer (1) nach einem der Ansprüche 10 bis 13,
wobei die erste Verteilungseinheit (13) eine Schmierfläche (17) aufweist, die derart angepasst ist, dass sie in Kontakt mit einem Teil des Förderbandes (3) für einen Teil seines zweiten Pfades steht, wenn das Förderband (3) bewegt wird, und wobei die zweite Verteilungseinheit (14) zumindest eine Fläche mit zumindest einer Schmiermittellieferöffnung besitzt, die entfernt, bevorzugt vertikal beabstandet von der Führungsfläche des Förderbandes (3) für einen Teil seines zweiten Pfades angeordnet ist, wenn sich das Förderband (3) bewegt.

16. Förderer (1) nach einem der Ansprüche 10 bis 15,
wobei die erste und zweite Verteilungseinheit (13, 14) mit einer oder mehreren Messvorrichtungen (22, 28) zum Dosieren der Menge an Schmiermittel, die zu der Transportfläche (7) und zu der Führungsfläche (10) zu liefern ist, ausgestattet sind.

17. Förderer (1) nach einem der Ansprüche 10 bis 16,
wobei die erste und zweite Verteilungseinheit (13, 14) jeweils zumindest einen Hauptkanal (19, 24) besitzen und zumindest einen Sekundärkanal (19', 24', 30, 30') besitzen können, der direkt oder indirekt mit einem der Hauptkanäle (19, 24) verbunden ist, um Schmiermittel zu der Transportfläche (7) und zu der Führungsfläche (10) des Förderbandes (3) für einen Teil seines zweiten Pfadabschnittes zu leiten,
wobei die Hauptkanäle (19, 24) sowohl der ersten als auch zweiten Verteilungseinheit (13, 14) Teil eines selben Schmiermittelkreislaufes (29) sind, oder
wobei der Hauptkanal (19) der ersten Verteilungseinheit(en) (13) und der Hauptkanal (24) der zweiten Verteilungseinheit(en) (14) Teil verschiedener oder unabhängiger Schmiermittelkreisläufe sind.

18. Förderer (1) nach einem der Ansprüche 10 bis 17,
der eine Schmiervorrichtung umfasst, die modular ist, wobei die Schmiervorrichtung zumindest zwei Verteilungseinheiten umfasst, die jeweils einen Körper umfassen, wobei die Körper der zumindest zwei Verteilungseinheiten aneinander befestigt sind, wobei die Verteilungseinheiten (13, 14), die aneinander befestigt sind, vorteilhafterweise jeweils einen oder mehrere Schmiermittellieferkanäle besitzen, die sich in deren Körper erstrecken oder diesen zugeordnet sind, wobei zumindest Schmiermittellieferkanäle, die sich in die Körper der aneinander befestigten Verteilungseinheiten erstrecken oder diesen zugeordnet sind, miteinander leckdicht verbunden sind.

19. Förderer (1) nach einem der Ansprüche 10 bis 18,
wobei die erste(n) und/oder zweite(n) Verteilungseinheit(en) einen Körper umfassen, der mit einem Bandreiniger und/oder einem Bandspüler versehen ist, wobei der Bandreiniger und/oder -spüler vorteilhafterweise aus der Gruppe gewählt ist, die umfasst:
- zumindest eine Düse (43), die mit einem Hauptkanal (41) verbunden ist, der sich in den Körper der zweiten Verteilungseinheit (14) zur Belieferung der zumindest einen Düse (43) mit zumindest einer Reinigungsflüssigkeit und/oder einer Spülflüssigkeit erstreckt oder diesem zugeordnet ist, wobei die zumindest eine Düse (43) zum Lenken von Reinigungsflüssigkeit und/oder Spülflüssigkeit auf einen Teil der Führungsfläche (10) des Förderbandes (3), die sich in der Transportrichtung bewegt, angepasst ist,
- zumindest eine Düse (46), die mit einem Hauptkanal (44) verbunden ist, der sich in den Körper der ersten Verteilungseinheit (13) zum Beliefern der zumindest einen Düse (46) mit zumindest einer Reinigungsflüssigkeit und/oder einer Spülflüssigkeit erstreckt oder diesem zugeordnet ist, wobei die zumindest eine Düse (46) zum Lenken von Reinigungsflüssigkeit und/oder Spülflüssigkeit auf einen Teil der Transportfläche (7) des Förderbandes, die sich in der Rückführrichtung bewegt, angepasst ist,
- zumindest eine Düse, die mit einem Hauptkanal verbunden ist, der sich in den Körper der Verteilungseinheit (14) zum Beliefern der zumindest einen Düse mit zumindest einer Reinigungsflüssigkeit und/oder Spülflüssigkeit erstreckt oder diesem zugeordnet ist, wobei die zumindest eine Düse zum Lenken von Reinigungsflüssigkeit oder Spülflüssigkeit an die Führungsfläche (10) des Förderbandes, die sich in der Rückführrichtung bewegt, angepasst ist, und vorteilhafterweise
- Kombinationen daraus,
in denen der Hauptkanal (41, 44) einer Anschlussverbindung (42) zum Verbinden des Hauptkanals (41, 44) mit einem Lieferrohr bevorzugt zumindest zugeordnet ist, das derart angepasst ist, um Reinigungsflüssigkeit an den Hauptkanal (41, 44) und/oder an einen Hauptkanal (41, 44) des Körpers einer anderen Verteilungseinheit zu liefern.

20. Förderer (1) nach einem der Ansprüche 18 oder 19,
wobei der Förderer zumindest zwei verschiedene oder unabhängige Förderbänder (3) umfasst, und wobei die Behandlungskanäle (44) der Körper der ersten Verteilungseinheiten (13), die in Bezug zueinander verbunden sind, leckdicht miteinander verbunden sind, und/ oder die Behandlungskanäle (41) der Körper der zweiten Verteilungseinheiten (13), die in Bezug zueinander verbunden sind, leckdicht miteinander verbunden sind.

21. Schmierausstattung, die spezifisch für einen Förderer nach einem der Ansprüche 10 bis 20 angepasst ist, wobei die Schmierausstattung zumindest eine erste Verteilungseinheit (13), die zum bevorzugt intermittierenden Auftragen von Schmiermittel auf einen Teil der Transportfläche (7) des Förderbandes bei Bewegung entlang eines Teiles seines zweiten Pfadabschnittes angepasst ist, und zumindest eine zweite Verteilungseinheit (14) umfasst, die zum bevorzugt intermittierenden Auftragen von Schmiermittel auf einen Teil der Führungsfläche (10) des Förderbandes (3) bei Bewegung entlang eines Teils seines zweiten Pfadabschnittes angepasst ist.

## Revendications

1. Procédé de lubrification d'un transporteur mobile assurant au moins un mouvement d'au moins un conteneur selon une direction de transport (P1), où ledit transporteur (I) comprend au moins :
- au moins une bande transporteuse sans fin (3),
- au moins un élément de guidage avec au moins une face de glisse (11) pour ladite au moins une bande transporteuse sans fin (3), ledit au moins un élément de guidage étant adapté pour le guidage de l'au moins une bande transporteuse sans fin au moins partiellement dans la direction du transport (P1),
- au moins un fournisseur de lubrifiant pour fournir à la bande transporteuse sans fin (3) au moins un lubrifiant, et
- au moins un système d'entraînement pour entraîner la bande transporteuse le long d'un trajet continu comprenant au moins
une première portion du trajet se déplaçant selon ladite direction de transport (P1), et
une seconde portion du trajet de ladite au moins une bande sans fin (3) se déplaçant dans la direction de retour (P2),
où ladite bande transporteuse comprend au moins :
(a) une surface de transport (7) adaptée pour supporter l'au moins un conteneur à déplacer dans la direction de transport, et
(b) au moins une surface de guidage (10) opposée à la surface de transport (7), où ladite au moins une surface de guidage (10) est adaptée pour être en contact avec au moins une face de glisse (11) de l'élément de guidage, où le lubrifiant est appliqué, de préférence par intermittence, sur une partie de la surface de transport (7) de la bande transporteuse (3) durant une partie de la seconde portion du trajet de la bande transporteuse se déplaçant dans la direction de retour, **caractérisée en ce que** le lubrifiant est appliqué aussi sur une partie de la surface de guidage (10) de la bande transporteuse (3) durant une partie de la seconde portion du trajet de la bande transporteuse se déplaçant dans la direction de retour.

2. Procédé selon la revendication 1, dans lequel ledit lubrifiant est un lubrifiant sans eau adapté pour adhérer à la surface de transport (7) et à la surface de guidage (10) de la bande transporteuse (3), où ledit lubrifiant a avantageusement une viscosité de minimum 15 cSt à 20°C.

3. Procédé selon la revendication 2, dans lequel un même lubrifiant est appliqué, de préférence par intermittence, sur une partie de la surface de transport (7) de la bande transporteuse (3) durant une partie de la seconde portion du trajet de la bande transporteuse se déplaçant dans la direction de retour, ainsi que sur une partie de la surface de guidage (10) de la bande transporteuse (3) durant une partie de la seconde portion du trajet de la bande transporteuse se déplaçant dans la direction de retour, de préférence durant pratiquement une même partie de la seconde portion du trajet.

4. Procédé selon l'une quelconque des revendications 1 à 3, dans lequel le lubrifiant est appliqué, de préférence par intermittence, sur une partie de la surface de transport (7) de la bande transporteuse (3) durant une partie de la seconde portion du trajet de la bande transporteuse se déplaçant dans la direction de retour à un taux d'application entre 0,005 et 0,10 mm³/cm² de la surface globale de la bande et par heure, et sur une partie de la surface de guidage (10) de la bande transporteuse (3) durant une partie de la seconde portion du trajet de la bande transporteuse se déplaçant dans la direction de retour à un taux d'application entre 0,0005 et 0,01 mm³/cm² de la surface globale de la bande et par heure.

5. Procédé selon l'une quelconque des revendications 1 à 4, dans lequel le lubrifiant est appliqué, de préférence par intermittence, sur une partie de la surface de transport (7) de la bande transporteuse (3) durant une partie de la seconde portion du trajet de la bande transporteuse se déplaçant dans la direction de retour, avantageusement à un taux d'application entre 0,005 et 0,10 mm³/cm² de la surface globale de la bande et par heure, en appliquant, de préférence par intermittence, le lubrifiant sur une surface de lubrification (17) et en déplaçant une partie de la bande transporteuse (3) le long de ladite surface de lubrification durant une partie de la seconde portion du trajet de la bande transporteuse se déplaçant dans la direction de retour et dans lequel le lubrifiant est avantageusement fourni par intermittence à la surface de lubrification (17) à des périodes de temps spécifiques d'apport espacées les unes des autres par une période intermédiaire sans apport de lubrifiant, par quoi aucun lubrifiant n'est fourni à la surface de lubrification pendant des périodes intermédiaires avantageusement d'au moins 5 minutes, de préférence d'au moins 10 minutes, le plus préférable d'au moins 15 minutes.

6. Procédé selon l'une quelconque des revendications 1 à 5, dans lequel le lubrifiant est fourni par intermittence à des périodes de temps spécifiques d'apport sur les parties successives de la surface de guidage (10) de la bande transporteuse (3) durant une partie de la seconde portion du trajet de la bande transporteuse se déplaçant dans la direction de retour, avantageusement à un taux d'application entre 0,0005 et 0,01 mm³/cm² de la surface globale de la bande et par heure, par quoi aucun lubrifiant n'est fourni à la surface de guidage (10) pendant les périodes intermédiaires entre deux périodes de temps d'apport successives, lesdites périodes intermédiaires sans apport de lubrifiant étant avantageusement d'au moins 5 minutes, de préférence d'au moins 10 minutes, le plus préférable d'au moins 15 minutes.

7. Procédé selon les revendications 5 et 6, dans lequel le lubrifiant est fourni sur les parties de la surface de guidage (10) de la bande transporteuse (3) durant une partie de la seconde portion du trajet de la bande transporteuse se déplaçant dans la direction de retour, en laissant tomber au moins un dixième d'une goutte (1/10), de préférence au moins un tiers d'une goutte (un tiers d'une goutte correspondant à environ 10 mm³) de lubrifiant aux périodes de temps spécifiques d'apport sur ladite surface de guidage (10), et dans lequel aux périodes de temps spécifiques d'apport, le lubrifiant est fourni avantageusement à la surface de lubrification (17), ainsi qu'à une partie de la surface de guidage (10) de la bande transporteuse (3) durant une partie de la seconde portion du trajet de la bande transporteuse se déplaçant dans la direction de retour, de préférence à une même partie ou pratiquement à la même partie de la seconde portion du trajet.

8. Procédé selon l'une quelconque des revendications 1 à 7, dans lequel au moins un paramètre fonction du frottement est au moins estimé, dans lequel ledit au moins paramètre estimé est comparé à l'au moins une valeur correspondant au frottement maximal admissible, par quoi quand le paramètre estimé correspond à un frottement supérieur audit frottement maximal admissible, le lubrifiant est appliqué, de préférence par intermittence, sur une partie de la surface de transport (7) de la bande transporteuse (3) durant une partie de la seconde portion du trajet de la bande transporteuse se déplaçant dans la direction de retour jusqu'à atteindre un paramètre estimé correspondant à un frottement inférieur audit frottement maximal admissible, ledit paramètre correspondant avantageusement à ou étant fonction du coefficient de frottement (COF), alors que la valeur correspondant au frottement maximal admissible est avantageusement une valeur correspondant à ou fonction d'un coefficient de frottement de 0,03 à 0,25.

9. Procédé de déplacement au moins partiel dans une direction de transport (P1), d'au moins un conteneur, de préférence une série de conteneurs, par placement dudit conteneur ou desdits conteneurs sur un transporteur mobile lubrifié selon un procédé selon l'une quelconque des revendications 1 à 8.

10. Transporteur (1) avec un moyen de lubrification d'au moins une bande transporteuse sans fin (3), avantageusement une ou plusieurs bandes transporteuses adaptées pour transporter des conteneurs choisis parmi le groupe constitué de bouteilles, de boîtes de conserve, d'emballages en carton, de flacons et de combinaisons de ceux-ci, dans un procédé selon l'une quelconque des revendications 1 à 8, ledit transporteur (1) comprenant au moins :
- au moins une bande transporteuse sans fin (3),
- au moins un élément de guidage avec au moins une face de glisse (11) pour ladite au moins une bande transporteuse sans fin (3), ledit au moins un élément de guidage étant adapté pour le guidage de l'au moins une bande transporteuse sans fin au moins partiellement dans la direction du transport (P1),
- au moins un fournisseur de lubrifiant pour fournir à la bande transporteuse sans fin (3) au moins un lubrifiant, et
- au moins un système d'entraînement pour entraîner la bande transporteuse le long d'un trajet continu comprenant au moins
une première portion du trajet se déplaçant selon ladite direction de transport (P1), et
une seconde portion du trajet de ladite au moins une bande sans fin (3) se déplaçant dans la direction de retour (P2),
où ladite bande transporteuse comprend au moins :
(a) une surface de transport (7) adaptée pour supporter l'au moins un conteneur à déplacer dans la direction de transport, et
(b) au moins une surface de guidage (10) opposée à la surface de transport (8), où ladite au moins une surface de guidage (10) est adaptée pour être en contact avec au moins une face de glisse (11) de l'élément de guidage, où ledit transporteur (1) comprend en plus une première unité de distribution (13) adaptée pour appliquer le lubrifiant, de préférence par intermittence, sur une partie de la surface de transport (7) de la bande transporteuse (3) durant une partie de la seconde portion du trajet de la bande transporteuse se déplaçant dans la direction de retour, **caractérisée en ce que** ledit transporteur comprend en plus une seconde unité de distribution (14) adaptée pour appliquer le lubrifiant, de préférence par intermittence, sur une partie de la surface de guidage (10) de la bande transporteuse (3) durant une partie de la seconde portion du trajet de la bande transporteuse se déplaçant dans la direction de retour.

11. Transporteur (1) selon la revendication 10, dans lequel la première unité de distribution (13) est placée face à une partie de la surface de transport (7) de la bande transporteuse (3) pour une partie de la seconde portion du trajet de la bande transporteuse se déplaçant dans direction de retour, alors que la seconde unité de distribution (14) est placée face à une partie de la surface de guidage (10) de la bande transporteuse (3) pour une partie de la seconde portion du trajet de la bande transporteuse se déplaçant dans la direction de retour.

12. Transporteur (1) selon les revendications 10 ou 11, dans lequel les première et seconde unités de distribution (13, 14) sont placées l'une par rapport à l'autre, de manière à ce que pour une partie de la bande transporteuse (3), la seconde unité de distribution (14) soit adaptée pour appliquer le lubrifiant sur la surface de guidage (10) de ladite partie, alors que la surface de transport (7) de ladite partie opposée à la partie de la surface de guidage (10) sur laquelle le lubrifiant est appliqué, puisse être simultanément lubrifiée par la première unité de distribution (13).

13. Transporteur (1) selon l'une quelconque des revendications 10 à 12, dans lequel la première unité de distribution (13) et la seconde unité de distribution (14) sont localisées l'une au moins pratiquement au-dessus de l'autre, tout en définissant ici entre elles un espace libre dans lequel la bande transporteuse (3) est au moins pratiquement verticalement mobile pour une partie de la seconde portion du trajet de la bande transporteuse se déplaçant dans la direction de retour.

14. Transporteur (1) selon l'une quelconque des revendications 10 à 13, dans lequel les surfaces de lubrification (17, 18) des deux dites unités de distribution (13, 14) sont en contact direct avec respectivement ladite surface de transport (7) et ladite surface de guidage (10) de ladite bande transporteuse (3) pour une partie de la seconde portion du trajet de la bande transporteuse se déplaçant dans la direction de retour.

15. Transporteur (1) selon l'une quelconque des revendications 10 à 13, dans lequel la première unité de distribution (13) a une surface de lubrification (17) adaptée pour être en contact avec une partie de la bande transporteuse (3) pour une partie de son second trajet, quand ladite bande transporteuse (3) est déplacée, et dans lequel la seconde unité de distribution (14) a au moins une surface avec au moins un orifice d'apport de lubrifiant qui est situé à l'écart, de préférence espacé verticalement de la surface de guidage de la bande transporteuse (3) pour une partie de son second trajet, quand ladite bande transporteuse (3) est déplacée.

16. Transporteur (1) selon l'une quelconque des revendications 10 à 15, dans lequel lesdites première et seconde unités de distribution (13, 14) sont équipées d'un ou de plusieurs dispositifs de mesure (22, 28) pour doser la quantité de lubrifiant à appliquer à la surface de transport (7) et à la surface de guidage (10).

17. Transporteur (1) selon l'une quelconque des revendications 10 à 16, dans lequel lesdites première et seconde unités de distribution (13, 14) ont chacune au moins un canal principal (19, 24) et peuvent avoir au moins un canal secondaire (19', 24', 30, 30') connecté directement ou indirectement à un desdits canaux principaux (19, 24) pour conduire le lubrifiant vers la surface de transport (7) et vers la surface de guidage (10) de la bande transporteuse (3) pour une partie de sa seconde portion de trajet,
dans lequel lesdits canaux principaux (19, 24) desdites deux première et seconde unités de distribution (13, 14) font partie d'un même circuit de lubrifiant (29) ou
dans lequel le canal principal (19) de la ou des premières unités de distribution (13) et ledit canal principal (24) de la ou des secondes unités de distribution (14) font partie de circuits de lubrifiant différents ou indépendants.

18. Transporteur (1) selon l'une quelconque des revendications 10 à 17, qui comprend un dispositif de lubrification qui est modulaire, ledit dispositif de lubrification comprenant au moins deux unités de distribution comprenant chacune un corps, par quoi les corps desdites au moins deux unités de distribution sont attachés ensemble, dans lequel les unités de distribution (13, 14) attachées l'une à l'autre ont avantageusement chacune un ou des canaux d'apport de lubrifiant s'étendant dans ou associé à leur corps, par quoi au moins les canaux d'apport de lubrifiant s'étendant dans ou associés aux corps des unités de distribution attachés les uns aux autres sont connectés de manière étanches les uns aux autres.

19. Transporteur (1) selon l'une quelconque des revendications 10 à 18, dans lequel les première et/ou seconde unités de distribution comprennent un corps équipé d'un nettoyeur et/ou rinceur de bande, par quoi le nettoyeur et/ou rinceur de bande est avantageusement choisi parmi le groupe constitué de :
- au moins une tuyère (43) connectée à un canal principal (41) s'étendant dans ou associé au corps de la seconde unité de distribution (14) pour fournir à ladite au moins une tuyère (43) au moins un liquide de nettoyage et/ou un liquide de rinçage, par quoi ladite au moins une tuyère (43) est adaptée pour diriger le liquide de nettoyage et/ou le liquide de rinçage sur une partie de la surface de guidage (10) de la bande transporteuse (3) se déplaçant dans la direction de transport,
- au moins une tuyère (46) connectée à un canal principal (44) s'étendant dans ou associé au corps de la première unité de distribution (13) pour fournir à ladite au moins une tuyère (46) au moins un liquide de nettoyage et/ou un liquide de rinçage, par quoi ladite au moins une tuyère (46) est adaptée pour diriger le liquide de nettoyage et/ou le liquide de rinçage sur une partie de la surface de transport (7) de la bande transporteuse se déplaçant dans la direction de retour,
- au moins une tuyère connectée à un canal principal s'étendant dans ou associé au corps de l'unité de distribution (14) pour fournir à ladite au moins une tuyère au moins un liquide de nettoyage et/ou un liquide de rinçage, par quoi ladite au moins une tuyère est adaptée pour diriger le liquide de nettoyage ou le liquide de rinçage sur la surface de guidage (10) de la bande transporteuse se déplaçant dans la direction de retour, et avantageusement
- les combinaisons de ceux-ci,
dans lequel le canal principal (41, 44) est avantageusement au moins associé à un raccord (42) pour raccorder ledit canal principal (41, 44) à une conduite d'alimentation adaptée pour fournir du liquide de nettoyage audit canal principal (41, 44) et/ou à un canal principal (41, 44) du corps d'une autre unité distribution.

20. Transporteur (1) selon les revendications 18 et 19, dans lequel le transporteur comprend au moins deux bandes transporteuses différentes ou indépendantes (3) et dans lequel lesdits canaux de traitement (44) des corps des premières unités de distribution (13) connectés les uns aux autres sont connectés les uns aux autres de manière étanche et/ou lesdits canaux de traitement (41) des corps des secondes unités de distribution (13) connectés les uns aux autres sont connectés de manière étanche les uns aux autres.

21. Equipement de lubrification adapté spécifiquement pour un transporteur selon l'une quelconque des revendications 10 à 20, ledit équipement de lubrification comprenant au moins une première unité de distribution (13) adaptée pour appliquer le lubrifiant, de préférence par intermittence, sur une partie de la surface de transport (7) de la bande transporteuse quand elle se déplace le long d'une partie de sa seconde portion de trajet et au moins une seconde unité de distribution (14) adaptée pour appliquer le lubrifiant, de préférence par intermittence, sur une partie de la surface de guidage (10) de la bande transporteuse (3) quand elle se déplace le long d'une partie de sa seconde portion de trajet.
